(19)

Europäisches
Patentamt

European
Patent Office

Office européen
des brevets

(11) **EP 4 513 826 A1**

(12) **EUROPEAN PATENT APPLICATION**
published in accordance with Art. 153(4) EPC

(43) Date of publication:
**26.02.2025 Bulletin 2025/09**

(21) Application number: **22944265.2**

(22) Date of filing: **31.05.2022**

(51) International Patent Classification (IPC):
***H04L 9/30*** (2006.01)

(52) Cooperative Patent Classification (CPC):
**H04L 9/30**

(86) International application number:
**PCT/CN2022/096486**

(87) International publication number:
**WO 2023/230929 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Yong
 Shenzhen, Guangdong 518129 (CN)**
• **YANG, Yanjiang
 Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND RELATED APPARATUS**

(57)    A communication method and a related apparatus are provided, and are applied to the fields of communication technologies and intelligent vehicles. The method includes: receiving a first message from a first node, where the first message includes a first key agreement parameter, the first key agreement parameter is obtained based on a first private key and an intermediate parameter, the intermediate parameter is obtained based on a security parameter and a common parameter, and the security parameter is a first password or a PSK; determining a first key based on the first key agreement parameter and a second private key; sending a second message to the first node, where the second message includes a second key agreement parameter, and the second key agreement parameter is obtained based on the second private key and the intermediate parameter; and obtaining the first key based on the first key agreement parameter and the second private key. According to embodiments of this application, security of a shared key can be improved, access of an untrusted attacker can be avoided, and node security can be improved.

FIG. 4

EP 4 513 826 A1

EP 4 513 826 A1

**Description**

**TECHNICAL FIELD**

This application relates to the fields of communication technologies and intelligent vehicle technologies, and in particular, to the field of short-range communication technologies, for example, communication in scenarios such as an intelligent vehicle, a smart home, a smart terminal, and smart manufacturing. Specifically, this application relates to a communication method and a related apparatus.

**BACKGROUND**

Nowadays, with rapid development of informatization, mobile terminals, mobile phones, tablet computers, or other portable smart terminals are indispensable personal intelligent tools. While enjoying convenience brought by informatization, people also face threats of security vulnerabilities and privacy leakage. An intelligent vehicle is used as an example. As vehicle communication is widely applied, wireless communication also brings a series of security risks to the vehicle. For example, a hacker may intrude into an in-vehicle information system by using an existing short-range communication technology, to obtain vehicle information, or even remotely control the vehicle. This poses an extremely high threat to user privacy and vehicle security.

To ensure communication security, a node usually encrypts to-be-transmitted data/data that is being transmitted before storing or transmitting the data, and a receiver node decrypts a ciphertext after receiving the data to restore a plaintext. Specifically, when accessing a first node, a second node usually first determines a shared key used by both the first node and the second node for communication encryption. However, in an existing access process, confidentiality of a generated shared key is low.

For example, when a mobile phone accesses a wireless fidelity (wireless fidelity, Wi-Fi) device, an 8-bit security parameter (the security parameter in this scenario is a Wi-Fi password) is directly entered, and the mobile phone and the wireless fidelity device may obtain a shared key. Because the security parameter may have a small quantity of bits, or a user uses a simple security parameter to facilitate memorization, the device may be easily accessed by an untrusted node, or a key generated based on the security parameter may be cracked. It can be easily learned that this access mode is likely to cause data leakage and threaten user privacy and security.

Therefore, how to improve security of a shared key and avoid access of an untrusted attacker is a technical problem that is being studied by a person skilled in the art.

**SUMMARY**

Embodiments of this application provide a communication method and a related apparatus, to improve security of a shared key and avoid access of an untrusted attacker.

According to a first aspect, an embodiment of this application provides a communication method. The method includes:

receiving a first message from a first node, where the first message includes a first key agreement parameter, the first key agreement parameter is associated with a first private key and an intermediate parameter, the intermediate parameter is associated with a security parameter and at least one common parameter, the security parameter is a first password, or a pre-shared key PSK between the first node and a second node, and the first password is an agreed access password between the first node and the second node;

sending a second message to the first node, where the second message includes a second key agreement parameter, and the second key agreement parameter is associated with a second private key and the intermediate parameter; and

obtaining a first key based on the first key agreement parameter and the second private key.

The PSK between the first node and the second node is a secret value shared between the first node and the second node, and the first password may be considered as a password for the first node to access the second node. The first private key is a private key corresponding to the first node. For example, the first node may determine a random number as the private key. The second private key is a private key corresponding to the second node. For example, the second node may determine a random number as the private key.

Optionally, the foregoing method may be applied to the second node, for example, implemented by using a chip or a software module in the second node.

In this embodiment of this application, the intermediate parameter is first obtained based on the security parameter and the common parameter, and the intermediate parameter is used to generate the first key agreement parameter. The security parameter is not directly used to generate a key, and the security parameter is not directly used to generate a key agreement parameter. Therefore, even if the security parameter has a small quantity of bits, confidentiality of the security parameter may be improved by using the common parameter, to reduce a possibility that the security parameter is cracked. Correspondingly, security of the first key is improved. This can reduce a possibility that an attacker accesses the second node, and improve communication security and data security of the node.

In a possible implementation of the first aspect, the method further includes:

receiving a third message from the first node, where the third message includes first authentication information, the first authentication information is associated with a second key, and the second key is associated with the second key agreement parameter and the first private key; and
verifying the first authentication information based on the first key.

In this embodiment of this application, a security parameter obtained by the first node needs to be consistent with a security parameter in the second node. In this way, the first node and the second node may participate in generation of consistent keys by using consistent security parameters. Specifically, parameters used by the second node to generate the first key include the second private key, the security parameter (in the first node), the common parameter, and the first private key, and parameters used by the first node to generate the second key include the first private key, the security parameter (in the second node), the common parameter, and the second private key. Because the parameters used to generate the first key and the parameters used to generate the second key are the same, if the security parameter in the first node and the security parameter in the second node are consistent, a generated first key and a generated second key are consistent.

The first node may obtain the first authentication information based on the second key, and the second node verifies the authentication information based on the first key. If verification succeeds, it indicates that the first key is consistent with the second key, that is, the second node and the first node have a same security parameter. This indicates that an identity of the second node is trusted.

When an attacker requests to access the second node, because the attacker does not have a security parameter consistent with that of the second node, the attacker cannot generate a shared key consistent with that of the second node. Therefore, the attacker cannot access the second node. This can prevent the attacker from accessing the second node, and prevent the second node from being successfully associated with the attacker with an untrusted identity.

In still another possible implementation of the first aspect, the first key is used to obtain one or more keys.

In a possible solution, the first key is used to obtain, through derivation, an encryption key, an integrity key, an identity authentication key, or the like.

In this way, a dedicated key may be obtained through derivation based on the first key in different scenarios. This avoids direct use of the first key for communication, and further improves security of the first key.

In still another possible implementation of the first aspect, the method further includes:
if verification on the first authentication information succeeds, sending an association establishment message to the first node.

In the foregoing implementation, if verification on the first authentication information succeeds, the second key obtained by the first node is consistent with the first key obtained by the second node. Therefore, it indicates that a security parameter in the first node is consistent with a security parameter in the second node, and an identity of the first node is trusted. The association establishment message indicates that the first node successfully accesses the second node, or indicates that association of the first node is completed. In this case, a following data transmission operation, determining a communication key, completing communication configuration information, or the like may be performed between the second node and the second node.

In still another possible implementation of the first aspect, the method further includes:
when verification on the first authentication information and integrity of the third message succeeds, sending an association establishment message to the first node.

In the foregoing implementation, the second node may verify message integrity of the third message. When verification on the integrity of the third message and verification on the first authentication information succeed, the association establishment message is sent to the first node.

In still another possible implementation of the first aspect, the method further includes:
receiving indication information that is of a key agreement algorithm and that is sent by the first node, where the key agreement algorithm includes a two-basis password exponential function key exchange (Two-Basis Password Exponential Key Exchange, TBPEKE) algorithm.

Optionally, the indication information of the key agreement algorithm includes indication information of a first key agreement algorithm, and the indication information of the first key agreement algorithm indicates a TBPEKE algorithm.

The TBPEKE algorithm is a security algorithm implemented based on an elliptic curve mathematical theory, and may allow two communication parties to create a key on an insecure channel, and the key may be used as a key to encrypt communication content in subsequent communication.

In the foregoing implementation, the first node and the second node may separately support a plurality of key agreement algorithms. When the first node requests to access the second node, the first node may indicate, to the second node in the first message, a key agreement algorithm to be used, so that the first node and the second node can agree on a key based on a consistent key agreement algorithm. This improves key agreement efficiency.

Optionally, because different elliptic curves are used, there may be a plurality of TBPEKE algorithms. For example, an elliptic curve used by the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like. It should be understood that the foregoing is an example description for ease of describing TBPEKE algorithms using different elliptic curves. In a specific implementation process, other elliptic curves may alternatively be used. Examples are not enumerated herein.

In still another possible implementation of the first aspect, the at least one common parameter includes a first common parameter and a second common parameter.

The first common parameter and the second common parameter are related to a first elliptic curve, the first elliptic curve is an elliptic curve corresponding to a key agreement algorithm, and the key agreement algorithm includes the TBPEKE algorithm.

In the foregoing implementation, the common parameter is a point on an elliptic curve, and the security parameter is a secret value. Due to a discrete logarithm problem of the elliptic curve, it is easy to obtain the intermediate parameter through calculation based on the security parameter and the common parameter. However, it is difficult to crack the security parameter by obtaining the first key agreement parameter and the common parameter. Therefore, the TBPEKE algorithm and the common parameter are used, so that a possibility that the security parameter is cracked can be reduced, and node security can be improved.

In still another possible implementation of the first aspect, the first common parameter and the second common parameter belong to points on the first elliptic curve.

In still another possible implementation of the first aspect, the first common parameter is predefined, the second common parameter is determined based on the first common parameter, a first random number, and a second random number, the first random number comes from the first node, and the second random number comes from the second node.

In a possible implementation of the first aspect, the at least one common parameter includes at least one basis point, and the at least one basis point belongs to a group whose order is p, where p is a prime number.

Mathematically, a group represents an algebraic structure with a binary operation that satisfies closure and the law of associativity and that has an identity element and an inverse element. In this embodiment of this application, an operation related to the group may be an operation on the first elliptic curve. The operation on the elliptic curve includes one or more operations of an elliptic curve point multiplication operation, an elliptic curve point addition operation, or the like.

Optionally, in this embodiment of this application, a group may be a cyclic subgroup of an elliptic curve.

A basis point, also referred to as a generator, is a parameter in an elliptic curve cryptographic algorithm. The basis point belongs to a point on an elliptic curve selected by the cryptographic algorithm.

Generally, an elliptic curve applicable to a cryptographic algorithm is defined in a finite field. Therefore, points on the elliptic curve in the finite field are also limited.

An order is a quantity of points in a group, that is, in a group whose order is p, a quantity of points on an elliptic curve is p. Optionally, any point A in the group satisfies: A=d*basis point, where * is an elliptic curve point multiplication operation, and a value range of d is [1, p-1].

Optionally, the group mentioned above may be a cyclic group or a cyclic subgroup related to an operation on the first elliptic curve.

Optionally, in some scenarios, the basis point may alternatively be replaced with a generator.

In still another possible implementation of the first aspect, when a selected key agreement algorithm is the TBPEKE algorithm, the at least one common parameter includes some or all elements in a group whose order is p, where p is a prime number.

A basis point (or referred to as a generator) of a subgroup whose order is p is U. For a selected number d, if a value range of d is [1, p-1], dU is included in the group.

Optionally, the at least one common parameter includes the basis point U. Further, optionally, the at least one common parameter further includes V obtained by performing an operation on U, where V=dU, and a range of d is [1, p).

In still another possible implementation of the first aspect, when a selected key agreement algorithm is the TBPEKE algorithm, the at least one common parameter includes two points in a group whose order is p, where p is a prime number.

Optionally, the two points may be two basis points. Alternatively, one of the two points is a basis point, and the other is a second basis point obtained through calculation based on the basis point. For ease of description, the two points are referred to as a first basis point and a second basis point in this application.

In still another possible implementation of the first aspect, when a selected key agreement algorithm is the TBPEKE algorithm, the common parameter of the TBPEKE algorithm includes a cyclic group whose order is a prime number p, and two independent basis points U and V in the group.

It should be understood that "independent" means that U and V are two points with different values, and is not intended to constitute a limitation that there is no association relationship between U and V. Optionally, U may be referred to as a first basis point, and V may be referred to as a second basis point.

In still another possible implementation of the first aspect, the method further includes:

receiving a first calculated value from the first node, where the first calculated value is related to a first random number and the first common parameter, the first random number is determined by the first node, and the first common parameter is predefined (for example, predefined based on the TBPEKE algorithm);

determining the second common parameter based on a second random number and the first calculated value; and sending a second calculated value to the first node, where the second calculated value is related to the second random number and the first common parameter, and the second calculated value is used by the first node to determine the second common parameter.

Optionally, the first common parameter is the foregoing first basis point, and the second common parameter is the foregoing second basis point.

In still another possible implementation of the first aspect, the intermediate parameter satisfies the following formula:

$$b = U + s * V,$$

where

b is the intermediate parameter, U and V are the at least one common parameter, s is the security parameter, "*" is an elliptic curve point multiplication operation, and " +" is an elliptic curve point addition operation.

In a possible implementation of the first aspect, U is the first basis point, and V is the second basis point. Further, U and V belong to a cyclic group whose order is p, where p is a prime number.

Optionally, an operation related to the group is an operation on the first elliptic curve. The first elliptic curve is an elliptic curve used by a selected key agreement algorithm. For example, if the selected key agreement algorithm is the TBPEKE algorithm, the first elliptic curve may be an elliptic curve defined by SM2, Curve25519, or the like.

In the foregoing implementation, the intermediate parameter (U + s * V) is obtained by performing a point addition operation and a point multiplication operation on the security parameter and the common parameter.

A person skilled in the art should be aware that, for a selected elliptic curve Ep(a, b), when a scalar k and a point P (the point P is on the elliptic curve) are given, it is easy to calculate R=k*P (where * is an elliptic curve point multiplication operation). However, when a point P and a point R are given (the point P and the point R are on the elliptic curve), it is extremely difficult to calculate which k satisfies kP=R. In actual use of the elliptic curve, in principle, P is quite large, and R is also quite large. It is a mathematical problem to calculate k points one by one and compare the k points with R. Therefore, the TBPEKE algorithm and the common parameter are used, so that a possibility that the security parameter s is cracked can be reduced, and node security can be improved.

In still another possible implementation of the first aspect, the first key agreement parameter KEt satisfies the following formula:

$$KEt = SKt * b,$$

the first key satisfies the following formula:

$$first\ key = SKg * KEt,$$

the second key agreement parameter KEg satisfies the following formula:

$$KEg = SKg * b,$$

and

the second key satisfies the following formula:

$$second\ key = SKt * KEg,$$

where
SKt is the first private key, and SKg is the second private key.

Because a point multiplication operation satisfies the law of associativity, first key=SKg*KEt=SKg*(SKt*b)=SKt*(SKg*b)=second key. Therefore, the first key determined by the first node is the same as the second key determined by the second node.

Specifically, first key=SKg*KEt=SKg*(SKt*b)=(SKt.SKg)*(U+s*V), and second key=SKt*KEg=SKt*(SKg*b)=(SKt.SKg)*(U+s*V), where "." is a multiplication operation. Therefore, the first key is the same as the second key.

The foregoing implementation provides a possible manner of obtaining the first key agreement parameter, the second key agreement parameter, the first key, and the second key in a case in which the first key agreement parameter and the second key agreement parameter are generated. In the manner, the security parameter is not directly used for calculation, but the intermediate parameter is first obtained based on the security parameter and the common parameter, and the intermediate parameter is used to generate the first key agreement parameter. This reduces a possibility that the security parameter is cracked, reduces a possibility that an attacker accesses the second node, and improves communication security and data security of a node.

In still another possible implementation of the first aspect, a value range of the first private key (SKt) is [1, p), and a value range of the second private key (SKg) is [1, p), where p is an order of an elliptic curve used by the TBPEKE algorithm.

In still another possible implementation of the first aspect, before the receiving a first message from a first node, the method further includes:
broadcasting a key agreement algorithm capability of the second node, where the key agreement algorithm capability of the second node represents a key agreement algorithm supported by the second node.

In still another possible implementation of the first aspect, key agreement algorithms supported by the first node are sorted according to a priority sequence.

In still another possible implementation of the first aspect, the first message further includes a first fresh parameter, the first message further includes a first fresh parameter, and the first authentication information is associated with the pre-shared key PSK between the first node and the second node, the second key, the second message, the first fresh parameter, and a key agreement algorithm capability of the second node.

In still another possible implementation of the first aspect, the verifying the first authentication information based on the first key includes:
verifying the first authentication information based on the PSK between the first node and the second node, the first key, the second message, the first fresh parameter, and the key agreement algorithm capability of the second node.

In the foregoing implementation, a parameter used to generate the first authentication information includes one or more of the PSK between the first node and the second node, the second key, the second message, the first fresh parameter, and the key agreement algorithm capability of the second node. In this way, when the first authentication information is verified, except that the first key and the second key need to be consistent, other parameters used to generate the first authentication information need to be consistent, so that verification can succeed. In this way, integrity of the foregoing parameters can be protected, a possibility that the second node is accessed by an attacker can be reduced, and security can be improved.

For example, if the first fresh parameter sent by the first node to the second node is tampered with, the first fresh parameter used when the second node verifies the first authentication information is different from the first fresh parameter used when the second node generates the first authentication information. As a result, verification on the first authentication information fails.

In still another possible implementation of the first aspect, the second message further includes second authentication information and a second fresh parameter; and the method further includes:
obtaining the second authentication information based on the PSK between the first node and the second node, the first key, the second fresh parameter, and the first message.

In the foregoing implementation, the second authentication information may be used by the first node to authenticate an identity of the second node. For example, the second node may generate verification information based on same parameters. If the verification information is the same as the first authentication information, it indicates that the second key generated by the first node is consistent with the first key generated by the second node, so that the identity of the second node can be authenticated. This avoids communication between the node and an attacker, and improves node security.

In still another possible implementation of the first aspect, the first message further includes a first fresh parameter, and the second message further includes a second fresh parameter; and the method further includes:
obtaining a third key based on the first key, the first fresh parameter, and the second fresh parameter.

In still another possible implementation of the first aspect, the PSK is preconfigured or predefined, or is obtained based on the first password.

In still another possible implementation of the first aspect, the method further includes:

obtaining the PSK between the first node and the second node according to a first correspondence.

It can be learned that the second node may store a correspondence between the PSK and the first node in a form of a correspondence. Therefore, the PSK between the first node and the second node may be obtained according to the correspondence.

In still another possible implementation of the first aspect, the method further includes:
determining the PSK between the first node and the second node based on the first password, the first fresh parameter, and the second fresh parameter.

In a possible design, the PSK is determined based on the first password, the first key, the first fresh parameter, and the second fresh parameter. For example, when the first node associates with the second node for the first time or the second node does not obtain a PSK corresponding to the first node, the second node may determine a new PSK.

According to a second aspect, an embodiment of this application provides a communication method. The method includes:

sending a first message to a second node, where the first message includes a first key agreement parameter, the first key agreement parameter is associated with a first private key and an intermediate parameter, the intermediate parameter is associated with a security parameter and at least one common parameter, the security parameter is a first password, or a pre-shared key PSK between a first node and the second node, and the first password is an agreed access password between the first node and the second node;

receiving a second message from the second node, where the second message includes a second key agreement parameter, and the second key agreement parameter is associated with a second private key and the intermediate parameter; and

obtaining a second key based on the second key agreement parameter and the first private key.

In a possible implementation of the second aspect, the method further includes:
sending a third message to the first node, where the third message includes first authentication information, and the first authentication information is associated with the second key.

Optionally, the foregoing method may be applied to the first node, for example, implemented by using a chip or a software module in the first node.

The PSK between the first node and the second node is a secret value shared between the first node and the second node, and the first password may be considered as a password for the first node to access the second node.

In a possible implementation of the second aspect, the second key is used to obtain one or more keys.

In a possible solution, the second key is used to obtain, through derivation, an encryption key, an integrity key, an identity authentication key, or the like.

In a possible implementation of the second aspect, the method further includes:
receiving an association establishment message from the second node.

In still another possible implementation of the second aspect, before the sending a first message to a second node, the method further includes:
selecting a first key agreement algorithm based on a key agreement algorithm capability of the second node, where the key agreement algorithm capability of the second node can indicate one or more key agreement algorithms supported by the second node.

In still another possible implementation of the second aspect, the method further includes:
sending indication information of a key agreement algorithm to the second node, where the indication information of the key agreement algorithm indicates a two-basis password exponential function key exchange TBPEKE algorithm.

The TBPEKE algorithm is a security algorithm implemented based on an elliptic curve mathematical theory, and may allow two communication parties to create a key on an insecure channel, and the key may be used as a key to encrypt communication content in subsequent communication.

Optionally, because different elliptic curves are used, there may be a plurality of TBPEKE algorithms. For example, an elliptic curve used by the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like.

In still another possible implementation of the second aspect, the at least one common parameter includes a first common parameter and a second common parameter.

The first common parameter and the second common parameter are related to a first elliptic curve, the first elliptic curve is an elliptic curve corresponding to the key agreement algorithm, and the key agreement algorithm includes the TBPEKE algorithm.

In still another possible implementation of the second aspect, the first common parameter and the second common parameter belong to points on the first elliptic curve.

In still another possible implementation of the second aspect, the first common parameter is predefined, the second common parameter is determined based on the first common parameter, a first random number, and a second random number, the first random number comes from the first node, and the second random number comes from the second node.

In a possible implementation of the second aspect, the at least one common parameter includes at least one basis point, and the at least one basis point belongs to a group whose order is p, where p is a prime number.

Optionally, the group may be a cyclic group or a cyclic subgroup related to an operation on the first elliptic curve.

Optionally, in some scenarios, the basis point may alternatively be replaced with a generator.

In still another possible implementation of the second aspect, when a selected key agreement algorithm is the TBPEKE algorithm, the at least one common parameter includes some or all elements in a group whose order is p, where p is a prime number.

A basis point (or referred to as a generator) of a subgroup whose order is p is U. For a selected number d, if a value range of d is [1, p-1], dU is included in the group.

Optionally, the at least one common parameter includes the basis point U. Further, optionally, the at least one common parameter further includes V obtained by performing an operation on U, where V=dU, and a range of d is [1, p-1].

In still another possible implementation of the second aspect, when a selected key agreement algorithm is the TBPEKE algorithm, the at least one common parameter includes two points in a group whose order is p.

Optionally, the two points may be two basis points. Alternatively, one of the two points is a basis point, and the other is a second basis point obtained through calculation based on the basis point. For ease of description, the two points are referred to as a first basis point and a second basis point in this application.

In still another possible implementation of the second aspect, when a selected key agreement algorithm is the TBPEKE algorithm, the common parameter of the TBPEKE algorithm includes a cyclic group whose order is a prime number p, and two independent basis points U and V in the group.

It should be understood that "independent" means that U and V are two points with different values, and is not intended to constitute a limitation that there is no association relationship between U and V.

In still another possible implementation of the second aspect, the method further includes:

sending a first calculated value to the second node, where the first calculated value is related to the first random number and the first common parameter, the first random number is determined by the first node, and the first common parameter is predefined;

receiving a second calculated value from the second node, where the second calculated value is related to a second random number and the first common parameter; and

determining the second common parameter based on the second random number and the first calculated value.

Optionally, the first common parameter is the foregoing first basis point, and the second common parameter is the foregoing second basis point.

In a possible implementation of the second aspect, the first key agreement algorithm is a key agreement algorithm supported by the first node, and the first key agreement algorithm has a highest priority in the key agreement algorithms supported by the second node.

In a possible implementation of the second aspect, the intermediate parameter satisfies the following formula:

$$b = U + s * V,$$

where

b is the intermediate parameter, U and V are the at least one common parameter, s is the security parameter, "*" is an elliptic curve point multiplication operation, and " +" is an elliptic curve point addition operation.

In a possible implementation of the second aspect, U is a first basis point, and V is a second basis point. Further, U and V belong to a group whose order is p, where p is a prime number. An operation related to the group is an operation on the first elliptic curve.

The first elliptic curve is an elliptic curve used by a selected key agreement algorithm. For example, if the selected key agreement algorithm is the TBPEKE algorithm, the first elliptic curve may be an elliptic curve defined by SM2, Curve25519, or the like.

In a possible implementation of the second aspect, the first key agreement parameter KEt satisfies the following formula:

$$KEt = SKt * b,$$

the first key satisfies the following formula:

$$first\ key = SKg * KEt,$$

the second key agreement parameter KEg satisfies the following formula:

$$KEg = SKg * b,$$

and
the second key satisfies the following formula:

$$second\ key = SKt * KEg,$$

where
SKt is the first private key, and SKg is the second private key.

Because a point multiplication operation satisfies the law of associativity, first key=SKg*KEt=SKg*(SKt*b)=SKt*(SKg*b)=second key. Therefore, the first key determined by the first node is the same as the second key determined by the second node.

Specifically, first key=SKg*KEt=SKg*(SKt*b)=(SKt.SKg)*(U+s*V), and second key=SKt*KEg=SKt*(SKg*b)=(SKt.SKg)*(U+s*V), where "." is a multiplication operation. Therefore, the first key is the same as the second key.

In a possible implementation of the second aspect, a value range of the first private key (SKt) is [1, p), and a value range of the second private key (SKg) is [1, p), where p is an order of an elliptic curve used by the TBPEKE algorithm.

In a possible implementation of the second aspect, before the sending a first message to a second node, the method further includes:

receiving the key agreement algorithm capability that is of the second node and that is sent by the second node, where the key agreement algorithm capability of the second node represents a key agreement algorithm supported by the second node.

In a possible implementation of the second aspect, key agreement algorithms supported by the first node are sorted according to a priority sequence.

In a possible implementation of the second aspect, the first message further includes a first fresh parameter, the first message further includes a first fresh parameter, and the first authentication information is associated with the pre-shared key PSK between the first node and the second node, the second key, the second message, the first fresh parameter, and the key agreement algorithm capability of the second node.

In a possible implementation of the second aspect, the second message further includes second authentication information and a second fresh parameter, and the second authentication information is associated with the PSK between the first node and the second node, the first key, the second fresh parameter, and the first message.

In a possible implementation of the second aspect, the method further includes:

verifying the second authentication information based on the PSK between the first node and the second node, the second key, the second fresh parameter, and the first message, and
when verification on the second authentication information and integrity of the second message succeeds, generating the first authentication information.

In a possible implementation of the second aspect, the first message further includes a first fresh parameter, and the second message further includes a second fresh parameter; and the method further includes:
obtaining a fourth key based on the second key, the first fresh parameter, and the second fresh parameter.

In a possible implementation of the second aspect, the PSK is preconfigured or predefined, or is obtained based on the first password.

In still another possible implementation of the second aspect, the method further includes:
obtaining the PSK between the first node and the second node according to a second correspondence.

It can be learned that the first node may store a correspondence between the PSK and the second node in a form of a correspondence. Therefore, the PSK between the first node and the second node may be obtained according to the correspondence.

In still another possible implementation of the second aspect, the method further includes:
determining the PSK between the first node and the second node based on the first password, the first fresh parameter, and the second fresh parameter.

In a possible design, the PSK is determined based on the first password, the first key, the first fresh parameter, and the second fresh parameter. When the first node associates with the second node for the first time or the first node does not obtain a PSK corresponding to the second node, the first node may determine a new PSK.

According to a third aspect, an embodiment of this application provides a communication apparatus. The communication apparatus includes a receiving unit, a sending unit, and a processing unit, and the communication apparatus is configured to implement the method described in any implementation of the first aspect.

In a possible implementation of the third aspect, the receiving unit is configured to receive a first message from a first node, where the first message includes a first key agreement parameter, the first key agreement parameter is associated with a first private key and an intermediate parameter, the intermediate parameter is associated with a security parameter and at least one common parameter, the security parameter is a first password, or a pre-shared key PSK between the first node and a second node, and the first password is an agreed access password between the first node and the second node.

The sending unit is further configured to send a second message to the first node, where the second message includes a second key agreement parameter, and the second key agreement parameter is associated with a second private key and the intermediate parameter.

The processing unit is configured to obtain a first key based on the first key agreement parameter and the second private key.

In a possible implementation of the third aspect, the receiving unit is further configured to receive a third message from the first node, where the third message includes first authentication information, the first authentication information is associated with a second key, and the second key is associated with the second key agreement parameter and the first private key.

The processing unit is further configured to verify the first authentication information based on the first key.

In still another possible implementation of the third aspect, the first key is used to obtain one or more keys.

In a possible solution, the first key is used to obtain, through derivation, an encryption key, an integrity key, an identity authentication key, or the like. In still another possible implementation of the third aspect, the sending unit is further configured to:

if verification on the first authentication information succeeds, send an association establishment message to the first node.

In still another possible implementation of the third aspect, the sending unit is further configured to:

when verification on the first authentication information and integrity of the third message succeeds, send an association establishment message to the first node.

In still another possible implementation of the third aspect, the receiving unit is further configured to:

receive indication information that is of a key agreement algorithm and that is sent by the first node, where the key agreement algorithm includes a TBPEKE algorithm.

Optionally, the indication information of the key agreement algorithm includes indication information of a first key agreement algorithm, and the indication information of the first key agreement algorithm indicates a TBPEKE algorithm.

Optionally, because different elliptic curves are used, there may be a plurality of TBPEKE algorithms. For example, an elliptic curve used by the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like.

In still another possible implementation of the third aspect, the at least one common parameter includes a first common parameter and a second common parameter.

The first common parameter and the second common parameter are related to a first elliptic curve, the first elliptic curve is an elliptic curve corresponding to the key agreement algorithm, and the key agreement algorithm includes the TBPEKE algorithm.

In still another possible implementation of the third aspect, the first common parameter and the second common parameter belong to points on the first elliptic curve.

In still another possible implementation of the third aspect, the first common parameter is predefined, the second common parameter is determined based on the first common parameter, a first random number, and a second random number, the first random number comes from the first node, and the second random number comes from the second node.

In a possible implementation of the third aspect, the at least one common parameter includes at least one basis point, and the at least one basis point belongs to a group whose order is p, where p is a prime number.

Optionally, the group may be a cyclic group or a cyclic subgroup related to an operation on the first elliptic curve.

Optionally, in some scenarios, the basis point may alternatively be replaced with a generator.

In still another possible implementation of the third aspect, when a selected key agreement algorithm is the TBPEKE algorithm, the at least one common parameter includes some or all elements in a group whose order is p, where p is a prime number.

A basis point (or referred to as a generator) of a subgroup whose order is p is U. For a selected number d, if a value range of d is [1, p-1], dU is included in the group.

Optionally, the at least one common parameter includes the basis point U. Further, optionally, the at least one common parameter further includes V obtained by performing an operation on U, where V=dU, and a range of d is [1, p-1].

In still another possible implementation of the third aspect, when a selected key agreement algorithm is the TBPEKE algorithm, the at least one common parameter includes two points in a group whose order is p.

Optionally, the two points may be two basis points. Alternatively, one of the two points is a basis point, and the other is a second basis point obtained through calculation based on the basis point. For ease of description, the two points are referred to as a first basis point and a second basis point in this application.

In still another possible implementation of the third aspect, when a selected key agreement algorithm is the TBPEKE algorithm, the common parameter of the TBPEKE algorithm includes a cyclic group whose order is a prime number p, and two independent basis points U and V in the group.

It should be understood that "independent" means that U and V are two points with different values, and is not intended to constitute a limitation that there is no association relationship between U and V.

In still another possible implementation of the third aspect, the receiving unit is further configured to receive a first calculated value from the first node, where the first calculated value is related to the first random number and the first common parameter, the first random number is determined by the first node, and the first common parameter is predefined.

The processing unit is further configured to determine the second common parameter based on a second random number and the first calculated value.

The sending unit is further configured to send a second calculated value to the first node, where the second calculated value is related to the second random number and the first common parameter, and the second calculated value is used by the first node to determine the second common parameter.

Optionally, the first common parameter is the foregoing first basis point, and the second common parameter is the foregoing second basis point.

In still another possible implementation of the third aspect, the at least one common parameter is two points, and each point is a point on an elliptic curve used by the TBPEKE algorithm.

In still another possible implementation of the third aspect, the intermediate parameter satisfies the following formula:

$$b = U + s * V,$$

where

b is the intermediate parameter, U and V are the at least one common parameter, s is the security parameter, "*" is an elliptic curve point multiplication operation, and " +" is an elliptic curve point addition operation.

In a possible implementation of the third aspect, U is a first basis point, and V is a second basis point. Further, U and V belong to a group whose order is p, where p is a prime number. An operation related to the group is an operation on the first elliptic curve.

The first elliptic curve is an elliptic curve used by a selected key agreement algorithm. For example, if the selected key agreement algorithm is the TBPEKE algorithm, the first elliptic curve may be an elliptic curve defined by SM2, Curve25519, or the like.

In still another possible implementation of the third aspect, the first key agreement parameter KEt satisfies the following formula:

$$KEt = SKt * b,$$

the first key satisfies the following formula:

$$first\ key = SKg * KEt,$$

the second key agreement parameter KEg satisfies the following formula:

$$KEg = SKg * b,$$

and

the second key satisfies the following formula:

$$second\ key = SKt * KEg,$$

where

SKt is the first private key, and SKg is the second private key.

Because a point multiplication operation satisfies the law of associativity, first key=SKg*KEt=SKg*(SKt*b)=SKt*(SKg*b)=second key. Therefore, the first key determined by the first node is the same as the second key determined by the second node.

Specifically, first key=SKg*KEt=SKg*(SKt*b)=(SKt.SKg)*(U+s*V), and second key=SKt*KEg=SKt*(SKg*b)=(SKt.SKg)*(U+s*V), where "." is a multiplication operation. Therefore, the first key is the same as the second key.

In still another possible implementation of the third aspect, a value range of the first private key (SKt) is [1, p), and a value range of the second private key (SKg) is [1, p), where p is an order of an elliptic curve used by the TBPEKE algorithm.

In still another possible implementation of the third aspect, the sending unit is further configured to: broadcast a key agreement algorithm capability of the second node, where the key agreement algorithm capability of the second node represents a key agreement algorithm supported by the second node.

In still another possible implementation of the third aspect, key agreement algorithms supported by the first node are sorted according to a priority sequence.

In still another possible implementation of the third aspect, the first message further includes a first fresh parameter, the first message further includes a first fresh parameter, and the first authentication information is associated with the pre-shared key PSK between the first node and the second node, the second key, the second message, the first fresh parameter, and the key agreement algorithm capability of the second node.

In still another possible implementation of the third aspect, the processing unit is further configured to: verify the first authentication information based on the PSK between the first node and the second node, the first key, the second message, the first fresh parameter, and the key agreement algorithm capability of the second node.

In still another possible implementation of the third aspect, the second message further includes second authentication information and a second fresh parameter, and the processing unit is further configured to: obtain the second authentication information based on the PSK between the first node and the second node, the first key, the second fresh parameter, and the first message.

In still another possible implementation of the third aspect, the first message further includes a first fresh parameter, and the second message further includes a second fresh parameter; and the processing unit is further configured to: obtain a third key based on the first key, the first fresh parameter, and the second fresh parameter.

In still another possible implementation of the third aspect, the PSK is preconfigured or predefined, or is obtained based on the first password.

In still another possible implementation of the third aspect, the processing unit is further configured to: obtain the PSK between the first node and the second node according to a first correspondence.

It can be learned that the second node may store a correspondence between the PSK and the first node in a form of a correspondence. Therefore, the PSK between the first node and the second node may be obtained according to the correspondence.

In still another possible implementation of the third aspect, the processing unit is further configured to: determine the PSK between the first node and the second node based on the first password, the first fresh parameter, and the second fresh parameter.

In a possible design, the PSK is determined based on the first password, the first key, the first fresh parameter, and the second fresh parameter.

According to a fourth aspect, an embodiment of this application provides a communication apparatus. The communication apparatus includes a sending unit, a receiving unit, and a processing unit, and the communication apparatus is configured to implement the method described in any implementation of the second aspect.

In a possible implementation of the fourth aspect, the sending unit is configured to send a first message to a second node, where the first message includes a first key agreement parameter, the first key agreement parameter is associated with a first private key and an intermediate parameter, the intermediate parameter is associated with a security parameter and at least one common parameter, the security parameter is a first password, or a pre-shared key PSK between a first node and the second node, and the first password is an agreed access password between the first node and the second node.

The receiving unit is further configured to receive a second message from the second node, where the second message includes a second key agreement parameter, and the second key agreement parameter is associated with a second private key and the intermediate parameter.

The processing unit is configured to obtain a second key based on the second key agreement parameter and the first private key.

In a possible implementation of the fourth aspect,
the sending unit is further configured to send a third message to the first node, where the third message includes first authentication information, and the first authentication information is associated with the second key.

In still another possible implementation of the fourth aspect, the second key is used to obtain one or more keys.

In a possible solution, the second key is used to obtain, through derivation, an encryption key, an integrity key, an identity authentication key, or the like.

In still another possible implementation of the fourth aspect, the receiving unit is further configured to:
receive an association establishment message from the second node.

In still another possible implementation of the fourth aspect, the communication apparatus further includes the processing unit, and the processing unit is configured to:
select a first key agreement algorithm based on a key agreement algorithm capability of the second node, where the key agreement algorithm capability of the second node can indicate one or more key agreement algorithms supported by the second node.

In still another possible implementation of the fourth aspect, the sending unit is further configured to send indication information of the first key agreement algorithm to the second node, where the indication information of the first key agreement algorithm indicates a two-basis password exponential function key exchange TBPEKE algorithm.

Optionally, because different elliptic curves are used, there may be a plurality of TBPEKE algorithms. For example, an elliptic curve used by the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like.

In still another possible implementation of the fourth aspect, the at least one common parameter includes a first common parameter and a second common parameter.

The first common parameter and the second common parameter are related to a first elliptic curve, the first elliptic curve is an elliptic curve corresponding to the key agreement algorithm, and the key agreement algorithm includes the TBPEKE algorithm.

In still another possible implementation of the fourth aspect, the first common parameter and the second common parameter belong to points on the first elliptic curve.

In still another possible implementation of the fourth aspect, the first common parameter is predefined, the second common parameter is determined based on the first common parameter, a first random number, and a second random number, the first random number comes from the first node, and the second random number comes from the second node.

In a possible implementation of the fourth aspect, the at least one common parameter includes at least one basis point, and the at least one basis point belongs to a group whose order is p, where p is a prime number.

Optionally, the group may be a cyclic group or a cyclic subgroup related to an operation on the first elliptic curve.

Optionally, in some scenarios, the basis point may alternatively be replaced with a generator.

In still another possible implementation of the fourth aspect, when a selected key agreement algorithm is the TBPEKE algorithm, the at least one common parameter includes some or all elements in a group whose order is p, where p is a prime number.

A basis point (or referred to as a generator) of a subgroup whose order is p is U. For a selected number d, if a value range of d is [1, p-1], dU is included in the group.

Optionally, the at least one common parameter includes the basis point U. Further, optionally, the at least one common parameter further includes V obtained by performing an operation on U, where V=dU, and a range of d is [1, p-1].

In still another possible implementation of the fourth aspect, when a selected key agreement algorithm is the TBPEKE algorithm, the at least one common parameter includes two points in a group whose order is p.

Optionally, the two points may be two basis points. Alternatively, one of the two points is a basis point, and the other is a second basis point obtained through calculation based on the basis point. For ease of description, the two points are referred to as a first basis point and a second basis point in this application.

In still another possible implementation of the fourth aspect, when a selected key agreement algorithm is the TBPEKE algorithm, the common parameter of the TBPEKE algorithm includes a cyclic group whose order is a prime number p, and two independent basis points U and V in the group.

It should be understood that "independent" means that U and V are two points with different values, and is not intended to constitute a limitation that there is no association relationship between U and V.

In still another possible implementation of the fourth aspect, the sending unit is configured to send a first calculated value to the second node, where the first calculated value is related to the first random number and the first common parameter, the first random number is determined by the first node, and the first common parameter is predefined.

The receiving unit is configured to receive a second calculated value from the second node, where the second calculated value is related to a second random number and the first common parameter.

The apparatus further includes the processing unit, and the processing unit determines the second common parameter based on the second random number and the first calculated value.

Optionally, the first common parameter is the foregoing first basis point, and the second common parameter is the foregoing second basis point.

In still another possible implementation of the fourth aspect, when the first key agreement algorithm is a two-basis password exponential function key exchange TBPEKE algorithm, the at least one common parameter is two points, and each point is a point on an elliptic curve used by the TBPEKE algorithm.

In still another possible implementation of the fourth aspect, the first key agreement algorithm is a key agreement algorithm supported by the first node, and the first key agreement algorithm has a highest priority in the key agreement algorithms supported by the second node.

In still another possible implementation of the fourth aspect, the intermediate parameter satisfies the following formula:

$$b = U + s * V,$$

where

b is the intermediate parameter, U and V are the at least one common parameter, s is the security parameter, "*" is an elliptic curve point multiplication operation, and " +" is an elliptic curve point addition operation.

In a possible implementation of the fourth aspect, U is a first basis point, and V is a second basis point. Further, U and V belong to a group whose order is p, where p is a prime number. An operation related to the group is an operation on the first elliptic curve.

The first elliptic curve is an elliptic curve used by a selected key agreement algorithm. For example, if the selected key agreement algorithm is the TBPEKE algorithm, the first elliptic curve may be an elliptic curve defined by SM2, Curve25519, or the like.

In still another possible implementation of the fourth aspect, the first key agreement parameter KEt satisfies the following formula:

$$KEt = SKt * b,$$

the first key satisfies the following formula:

$$first\ key = SKg * KE,$$

the second key agreement parameter KEg satisfies the following formula:

$$KEg = SKg * b,$$

and
the second key satisfies the following formula:

$$second\ key = SKt * KEg,$$

where
SKt is the first private key, and SKg is the second private key.

Because a point multiplication operation satisfies the law of associativity, first key=SKg*KEt=SKg*(SKt*b)=SKt* (SKg*b)=second key. Therefore, the first key determined by the first node is the same as the second key determined by the second node.

Specifically, first key=SKg*KEt=SKg*(SKt*b)=(SKt.SKg)*(U+s*V), and second key=SKt*KEg=SKt*(SKg*b)= (SKt.SKg)*(U+s*V), where "." is a multiplication operation. Therefore, the first key is the same as the second key.

In still another possible implementation of the fourth aspect, a value range of the first private key (SKt) is [1, p), and a value range of the second private key (SKg) is [1, p), where p is an order of an elliptic curve used by the TBPEKE algorithm.

In still another possible implementation of the fourth aspect, the receiving unit is further configured to:
receive the key agreement algorithm capability that is of the second node and that is sent by the second node, where the key agreement algorithm capability of the second node represents a key agreement algorithm supported by the second node.

In still another possible implementation of the fourth aspect, key agreement algorithms supported by the first node are sorted according to a priority sequence.

In still another possible implementation of the fourth aspect, the first message further includes a first fresh parameter, the first message further includes a first fresh parameter, and the first authentication information is associated with the pre-shared key PSK between the first node and the second node, the second key, the second message, the first fresh parameter, and the key agreement algorithm capability of the second node.

In still another possible implementation of the fourth aspect, the second message further includes second authentication information and a second fresh parameter, and the second authentication information is associated with the PSK between the first node and the second node, the first key, the second fresh parameter, and the first message.

In still another possible implementation of the fourth aspect, the processing unit is further configured to:

verify the second authentication information based on the PSK between the first node and the second node, the second key, the second fresh parameter, and the first message; and
when verification on the second authentication information and integrity of the second message succeeds, generate the first authentication information.

In a possible implementation of the fourth aspect, the first message further includes a first fresh parameter, and the second message further includes a second fresh parameter; and the processing unit is further configured to:
obtain a fourth key based on the second key, the first fresh parameter, and the second fresh parameter.

In a possible implementation of the fourth aspect, the PSK is preconfigured or predefined, or is obtained based on the first password.

In still another possible implementation of the fourth aspect, the processing unit is further configured to:
obtain the PSK between the first node and the second node according to a second correspondence.

In still another possible implementation of the fourth aspect, the processing unit is further configured to:
determine the PSK between the first node and the second node based on the first password, the first fresh parameter, and the second fresh parameter.

According to a fifth aspect, an embodiment of this application discloses a communication apparatus, including a processor and a communication interface. The communication interface is configured to receive and/or send data, and/or the communication interface is configured to provide input and/or output for the processor. The processor is configured to invoke a computer program stored in a memory, to implement the method described in any one of the first aspect or the possible implementations of the first aspect.

According to a sixth aspect, an embodiment of this application discloses a communication apparatus, including a processor and a communication interface. The communication interface is configured to receive and/or send data, and/or the communication interface is configured to provide input and/or output for the processor. The processor is configured to invoke a computer program stored in a memory, to implement any one of the possible implementations of the second aspect or the third aspect.

It should be noted that the processors/processor included in the communication apparatuses/apparatus described in the fifth aspect and/or the sixth aspect may be a processor specially configured to perform these methods (referred to as a dedicated processor for ease of differentiation), or may be a processor that performs these methods by invoking the computer program, for example, a general-purpose processor. Optionally, the at least one processor may further include both a dedicated processor and a general-purpose processor.

Optionally, the computer program may be stored in the memory. For example, the memory may be a non-transitory (non-transitory) memory, for example, a read-only memory (Read-Only Memory, ROM). The memory and the processor may be integrated on a same component, or may be separately disposed on different components. A type of the memory and a manner of disposing the memory and the processor are not limited in this embodiment of this application.

In a possible implementation, the at least one memory is located outside the communication apparatus.

In another possible implementation, the at least one memory is located in the communication apparatus.

In still another possible implementation, some memories of the at least one memory are located in the communication apparatus, and the other memories are located outside the communication apparatus.

In this application, the processor and the memory may alternatively be integrated into one component. In other words, the processor and the memory may alternatively be integrated together.

According to a seventh aspect, an embodiment of this application further provides a chip system. The chip system includes at least one processor and a communication interface, the communication interface is configured to send and/or receive data, and the at least one processor is configured to invoke a computer program stored in at least one memory, to enable the chip system to implement the method described in any one of the first aspect or the possible implementations of the first aspect or implement the method described in any one of the second aspect or the possible implementations of the second aspect.

According to an eighth aspect, an embodiment of this application further provides a communication system. The communication system includes a first node and a second node. The second node includes the communication apparatus described in any one of the third aspect or the possible implementations of the third aspect, or the second node is a node that implements any one of the first aspect or the possible implementations of the first aspect. The first node includes the communication apparatus described in any one of the fourth aspect or the possible implementations of the fourth aspect, or the first node is a node that implements any one of the second aspect or the possible implementations of the second aspect.

According to a ninth aspect, an embodiment of this application discloses a computer-readable storage medium. The computer-readable storage medium stores a computer program. When the computer program is run on a computer, the computer is enabled to perform the method described in any one of the first aspect or the possible implementations of the first aspect, or perform the method described in any one of the second aspect or the possible implementations of the second aspect.

According to a tenth aspect, an embodiment of this application discloses a computer program product. When the computer program product runs on one or more processors, the method described in any one of the first aspect or the possible implementations of the first aspect is performed, or the method described in any one of the second aspect or the possible implementations of the second aspect is performed.

According to an eleventh aspect, an embodiment of this application discloses a terminal. The terminal may be an intelligent cockpit product, a vehicle, or the like, and the terminal includes a first node and/or a second node.

The second node includes the apparatus described in any one of the third aspect or the possible implementations of the third aspect.

The first node includes the communication apparatus described in any one of the fourth aspect or the possible implementations of the fourth aspect.

Optionally, the first node includes one or more of modules such as a camera, a screen, a microphone, a stereo, a radar, an electronic key, a passive entry passive start system controller, and user equipment (user equipment, UE).

Optionally, the second node includes one or more of modules such as a gateway, a base station, and a car cockpit domain controller CDC. Alternatively, the vehicle may be replaced with a smart terminal or a transportation vehicle such as an unmanned aerial vehicle or a robot.

For beneficial effects of the technical solutions provided in the second to the eleventh aspects of this application, refer to beneficial effects of the technical solutions in the first aspect. Details are not described herein again.

**BRIEF DESCRIPTION OF DRAWINGS**

The following briefly describes accompanying drawings used for describing embodiments.

FIG. 1(a), FIG. 1(b), and FIG. 1(c) each are a diagram of a point addition operation according to an embodiment of this application;
FIG. 2 is a diagram of a communication system according to an embodiment of this application;
FIG. 3 is a diagram of a communication scenario according to an embodiment of this application;
FIG. 4 is a schematic flowchart of a communication method according to an embodiment of this application;
FIG. 5 is a flowchart of a common parameter determining method according to an embodiment of this application;
FIG. 6 is a schematic flowchart of another communication method according to an embodiment of this application;
FIG. 7A and FIG. 7B are a schematic flowchart of still another communication method according to an embodiment of this application;
FIG. 8 is a diagram of a structure of a communication apparatus according to an embodiment of this application; and
FIG. 9 is a diagram of a structure of another communication apparatus according to an embodiment of this application.

**DESCRIPTION OF EMBODIMENTS**

To facilitate understanding of detailed implementation of solutions in embodiments of this application, the following first describes technical terms used in embodiments of this application.

1. Node (node)

The node is an electronic device having a communication capability, and is also referred to as a communication node. For example, the node may include an independent device such as a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus, or may be a component (for example, a chip or an integrated circuit) included in an independent device. The node may be any possible smart terminal device (for example, a mobile phone), any possible intelligent transportation device (for example, a vehicle or an uncrewed aerial vehicle), any possible smart manufacturing device, any possible smart home device (for example, a large screen or a speaker), or the like.

For example, when the node is a vehicle-mounted device, the node may be a cockpit (cockpit domain) device or a module in a cockpit device, for example, one or more of modules such as a cockpit domain controller (cockpit domain controller, CDC), a camera, a screen, a microphone, a speaker, an electronic key, and a passive entry passive start system controller. In a vehicle, a node may alternatively be a battery management system and a battery in a battery pack.

For example, when a node is a handheld terminal, the node may be a mobile phone (mobile phone), a wearable device, a tablet computer (pad), a computer (such as a notebook computer or a palmtop computer) with a data receiving and sending function, or the like.

A node in embodiments of this application may be applied to a plurality of application scenarios, for example, the following application scenarios: mobile internet (mobile internet, MI), industrial control (industrial control), unmanned driving (self-driving), transportation safety (transportation safety), an internet of things (internet of things, IoT), a smart city (smart city), or a smart home (smart home).

The node in this application may be applied to a plurality of types of networks, for example, applied to one or more of the following types of networks: a long term evolution (long term evolution, LTE) network, a fifth generation mobile communication technology (5th Generation Mobile Communication Technology, 5G), a wireless local area network (for example, Wi-Fi), Bluetooth (Bluetooth, BT), ZigBee (ZigBee), SparkLink (SparkLink), or a vehicle-mounted short-range wireless communication network.

In some application scenarios or some types of networks, a name of a device having a similar communication capability may not be referred to as a node. However, for ease of description, devices having a communication capability are collectively referred to as nodes in embodiments of this application.

2. Security algorithm (or referred to as cryptographic algorithm)

(1) Key agreement algorithm

Key agreement is a process in which two communication parties exchange some parameters to obtain a key through agreement. An algorithm used for key agreement is referred to as a key agreement algorithm, or may be referred to as a key negotiation algorithm. Key agreement algorithms include a two-basis password exponential function key exchange (Two-Basis Password Exponential Key Exchange, TBPEKE) algorithm, a Diffie-Hellman key exchange (Diffie-Hellman key exchange, DH) algorithm, an elliptic curve cryptography (Elliptic Curve Cryptosystems, ECC)-based DH (ECDH) algorithm, a Chinese cryptographic algorithm (such as SM2), an Oakley (Oakley) algorithm, and the like.

It should be noted that the key agreement algorithm may also be considered as a key agreement protocol, that is, for two communication parties, the key agreement algorithm defines key generation and exchanging rules.

(2) Key derivation algorithm (key derivation function, KDF)

The key derivation algorithm (or referred to as a key derivation algorithm) is used to derive (or referred to as derivation or deriving) one or more secret values from a secret value. For example, a new secret value DK derived from a secret value Key may be represented as follows: DK=KDF(Key). Certainly, Key herein is merely an example. In a specific implementation process, other parameters may be further used in a key derivation process.

Key derivation algorithms in embodiments of this application may include a password-based key derivation function (password-based key derivation function, PBKDF), a scrypt (scrypt) algorithm, and the like. The PBKDF algorithm further includes a first-generation PBKDF 1 and a second-generation PBKDF 2.

It should be understood that some KDF algorithms may perform a hash change on an input secret value according to a hash algorithm. Therefore, the KDF function may further receive an algorithm identifier as input, to indicate a hash algorithm to be used.

It should be noted that the KDF is not only used to derive a secret value, but also used to generate authentication information, identity information, and the like. In some possible implementations, when the authentication information and the identity information are generated, a key derivation algorithm may also be referred to as an authentication algorithm (authentication function, AUF, or AUTH function), and the authentication algorithm is used to obtain the authentication information based on an input parameter.

(3) Encryption (encryption) algorithm

The encryption algorithm is used to protect confidentiality (confidentiality) of data, and may encrypt a plaintext to obtain a ciphertext. The encryption algorithm may include an encryption operation (for example, an elliptic point addition operation or an exclusive OR operation), or may include various mathematical functions with high security. Common encryption algorithms include an exclusive OR operation, a data encryption standard (data encryption standard, DES), a triple data encryption algorithm (triple data encryption algorithm, 3DES), an advanced encryption standard (advanced encryption standard, AES), an RSA encryption algorithm, a data structure analysis (data structure analysis, DSA) algorithm, a Chinese cryptographic algorithm (such as SM4), a ZUC algorithm set (ZUC algorithm, such as a ZUC algorithm, an encryption algorithm 128-EEA3, or an integrity algorithm 128-EIA3), and the like.

3. TBPEKE algorithm

In embodiments of this application, the TBPEKE algorithm is a security algorithm implemented based on an elliptic curve mathematical theory, and may allow two communication parties to create a key on an insecure channel, and the key may be used as a key to encrypt communication content in subsequent communication. Optionally, in embodiments of this application, an elliptic curve used by the TBPEKE algorithm includes one or more of the following elliptic curves: an elliptic curve defined by SM2, Curve25519, or the like.

The following first describes an elliptic curve.

A curve equation of the elliptic curve is a binary cubic equation, and has a plurality of forms. The most commonly used formula is as follows:

$$E = \{(x, y) \in R | y^2 = x^3 + ax + b, 4a^3 + 27b^2 \neq 0\}.$$

It is easy to learn from the curve equation that the elliptic curve is symmetric relative to an X axis. The determining formula $4a^3 + 27b^2 \neq 0$ may implement that the elliptic curve does not have a singular point, that is, the elliptic curve is smooth and derivable at any place. This facilitates various operations on the elliptic curve. Details are as follows.

a. Elliptic curve point addition (point addition) operation

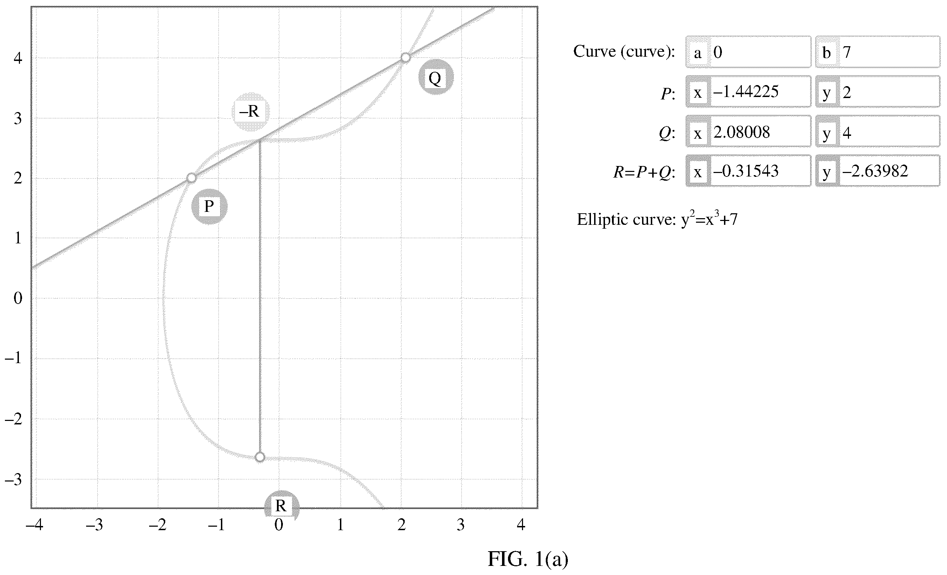

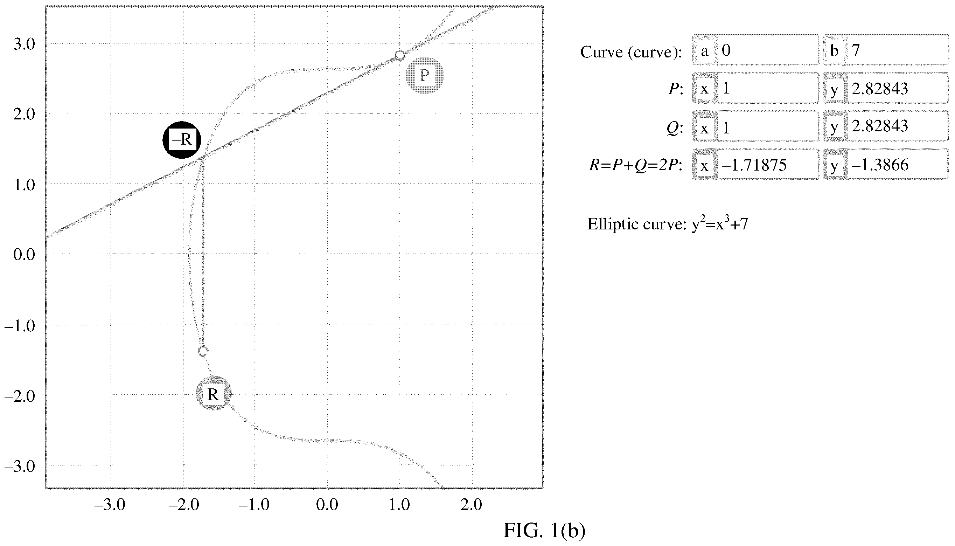

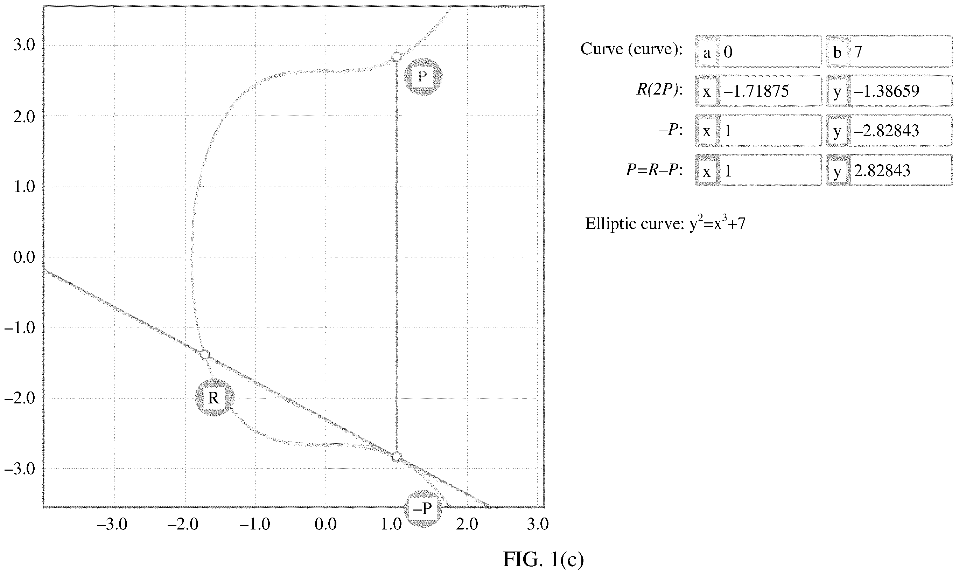

FIG. 1(a), FIG. 1(b), and FIG. 1(c) each are a diagram of a possible point addition operation according to this application. Refer to FIG. 1(a). An elliptic curve addition operation may be represented in the following manner: marking a point P and a point Q on a curve (an elliptic curve on which a=0 and b=7 is used as an example in FIG. 1(a), FIG. 1(b), and FIG. 1(c), that is, y2=x3+7); drawing a straight line that passes through points P and Q and that intersects with the curve at a third point -R; and continuing to draw a symmetric point R of the point -R relative to an X axis. The point R is a point obtained by adding the points P and Q, and is denoted as P+Q=R.

It should be noted that the elliptic curve is symmetric relative to the X axis. Therefore, R is a symmetric point of the point -R. Because the point -R is on the elliptic curve, the point R is definitely also on the elliptic curve, that is, the point obtained by adding P and Q is on the elliptic curve.

Refer to FIG. 1(b). When P=Q, a tangent line about the elliptic curve is drawn by using the point P as a tangent point, the tangent line intersects with the elliptic curve at another point, and the another point is denoted as a point -R. Similarly, a symmetry point R of the point -R relative to the X-axis is drawn. The point R is a point obtained by adding points P and P, and is denoted as P+P=2P=R.

b. Elliptic curve point subtraction operation

Refer to FIG. 1(c). Because R-P=R+(-P), calculating (R-P) is equivalent to an addition operation of a point R and a point -P. In addition, the point -P is a symmetry point of the point P. Therefore, when a straight line passing through points R and -P is drawn, it can be seen that the straight line is tangent to the elliptic curve at the point -P because the elliptic curve is symmetric relative to the X axis. Therefore, the symmetry point P of the point - P relative to the X axis is drawn, and the point P is a point obtained by adding the point R and the point -P.

c. Elliptic curve point multiplication (point multiplication) operation

A point on the elliptic curve is continuously added for n times, to obtain a result of adding a point P for n times, and the result is denoted as nP. A quantity n of addition times is an integer, and may be referred to as a scalar. The elliptic curve point multiplication operation may be referred to as a scalar multiplication (scalar multiplication) operation, and may be referred to as a multi-scalar multiplication (multi-scalar multiplication) operation when a plurality of scalars are used.

It should be noted that a point multiplication algorithm may have different definitions in different operation scenarios, and implementation depends on a specifically defined operation rule of the point multiplication algorithm. Herein, a possible calculation manner of an elliptic curve point multiplication algorithm is listed.

The following describes an elliptic curve applicable to a cryptographic algorithm.

The elliptic curve provided above is continuous and defined in a real number field, and is not suitable for use in an encryption process. Therefore, an elliptic curve used in a cryptographic algorithm is usually defined on a finite field. The finite field is a set with finite elements. The finite field is constrained, so that points on the elliptic curve can generate cyclic subgroups.

Elliptic curve point addition and point multiplication in the finite field are slightly different from elliptic curve point addition and point multiplication in the real number field. For details, refer to a definition in the conventional technology.

For a selected elliptic curve, when a scalar k and a point G are given, it is easy to calculate R=k*G (* is an elliptic curve point multiplication operation). However, when a point G and a point R are given (the point G and the point R are on the elliptic curve), it is extremely difficult to calculate which k satisfies kG=R. In actual use of the elliptic curve, in principle, G is quite large, and R is also quite large. It is a mathematical problem to calculate k points one by one and compare the k points with R. This is a discrete logarithm problem on the elliptic curve.

The following describes a key exchange process based on the TBPEKE algorithm.

It is assumed that both parties of key exchange are a first node and a second node, and there is a security parameter s shared between the first node and the second node. An elliptic curve used by the TBPEKE algorithm is E, and U and V are two points on the elliptic curve E. When the first node and the second node perform key exchange, the following exchange steps are performed.

Step 1: The first node calculates an intermediate parameter b, where b = (U + s * V), "+" herein represents an elliptic curve point addition operation, "*" represents an elliptic curve point multiplication operation, and "." in subsequent formulas represents common multiplication; and the first node generates a random number as a private key SKt of the first node, and calculates a public key PKt = SKt * (U + s * V), where the public key PKt is used as a key agreement parameter KEt.

Step 2: The first node sends the key agreement parameter KEt to the second node.

Step 3: The second node calculates the intermediate parameter b, where b = (U + s * V), and generates a random number as a private key SKg of the second node; and the second node calculates a public key PKg, where PKg = SKg * (U + s * V), and the public key PKg is used as a key agreement parameter KEg.

Step 4: The second node sends KEg to the first node.

Step 5: The second node obtains a key $K_{KE}$ based on the private key of the second node and the public key of the first node, that is:

$$K_{KE} = SKg * KEt = SKg * (SKt * b) = (SKt. SKg) * (U + s * V).$$

Step 6: The first node obtains a key $K_{KE}'$ based on the private key of the first node and the public key of the second node, that is:

$$K_{KE}' = SKt * KEg = SKt * (SKg * b) = (SKt. SKg) * (U + \ s * V).$$

$K_{KE}$=(SKt. SKg) * (U + s * V)=$K_{KE}'$, that is, both parties obtain consistent keys $K_{KE}$. The key $K_{KE}$ is not directly transmitted, and it is difficult for an attacker to obtain $K_{KE}$ through calculation based on the obtained U, V, KEt, and KEg. Therefore, the key $K_{KE}$ obtained by using the TBPEKE algorithm is secure.

It may be understood that the foregoing explanation about the algorithm is merely for briefly describing an implementation principle, and whether a same parameter needs to be used for implementation during use is not limited. There may be other improvements and variations in a specific implementation process of the algorithm. The algorithm mentioned in this application may be an improved and/or variant algorithm.

4. Fresh parameter

The fresh parameter is a parameter in the field of information security, is used to generate a key, an authentication parameter, and the like, and may also be referred to as freshness. The fresh parameter may include one or more of a random number, a count value (counter), a serial number (serial number), a sequence number (sequence number), and the like. Fresh parameters generated at different moments are usually different.

It may be understood that a specific value of the fresh parameter changes each time the fresh parameter is generated, so that a fresh parameter (or an authentication parameter, or the like) used to generate a key this time is different from a fresh parameter (or an authentication parameter, or the like) used to generate a key last time. This can improve security of a generated key.

A non-repeated random number (number once, NONCE) is a (non-repeated) random number that is used only once.

5. Password

The password may be understood as a password preconfigured or predefined by a node for access of another node, or understood as a secret value agreed on between two nodes. Optionally, the password may be in a form of a character string (or a number) including one or more of a number, a letter, a symbol, and the like, and may be entered via a keyboard, voice, biological information, or the like. For example, in a scenario in which a mobile phone terminal accesses a router that supports a wireless fidelity (wireless fidelity, Wi-Fi) protocol, the mobile phone terminal may access the router by using a "Wi-Fi password", and the "Wi-Fi password" may be understood as a password of the router.

For ease of understanding, this application lists several possible password use scenarios as examples (an example in which a first node requests to access a second node is used).

Scenario 1: The second node predefines or preconfigures a first password. A user of the first node may enter the first password on the first node to access the second node. For example, a vehicle owner configures the first password for a vehicle through an administrator interface. When a smartphone of the vehicle owner needs to access the vehicle, the vehicle owner may enter the first password in the smartphone, and the smartphone requests to access the vehicle according to the entered first password.

Scenario 2: The second node predefines or preconfigures a first password. Similarly, the first password for accessing the second node is also preconfigured in the first node. When the first node needs to access the second node, the first node may perform access by using the preconfigured first password. For example, when a vehicle is assembled, a host factory may configure a first password in a CDC of the vehicle, and configure a first password of the CDC in a radar of the vehicle. In this way, the radar may access the CDC by using the first password of the CDC.

Scenario 3: A third-party device (a device trusted by the second node such as a network side device, a certificate center, or an authentication server) may allocate an agreed value to the second node and the first node, where the agreed value may be used by the first node to access the second node, and the agreed value may be referred to as an access password of the second node.

It should be noted that an association between parameters indicates that there is a relationship between the parameters. For example, if a parameter A is associated with a parameter B, it indicates that there is a correspondence (or a mapping relationship) between the parameter A and the parameter B, or the parameter B is used in a calculation process of the parameter A (optionally, other parameters may also be used).

"Authentication", "verification", and "verify" mentioned in embodiments of this application may represent meanings of checking whether information is correct or reasonable. "Access" mentioned in embodiments of this application indicates a process in which a first node establishes a connection to a third node. In some specific technical scenarios, a process of "accessing" another node by one node may also be described as "associating" with another node by one node.

In addition, in embodiments of this application, unless otherwise specified, "*" is an elliptic curve point multiplication operation, "+" is an elliptic curve point addition operation, and "." is a multiplication operation.

The following describes a system architecture and a service scenario of embodiments of this application. It should be noted that the system architecture and the service scenario described in this application are intended to describe the technical solutions in this application more clearly, and do not constitute a limitation on the technical solutions provided in this application. A person of ordinary skill in the art may be aware that with evolution of the system architecture and emergence of new service scenarios, the technical solutions provided in this application are also applicable to similar technical problems.

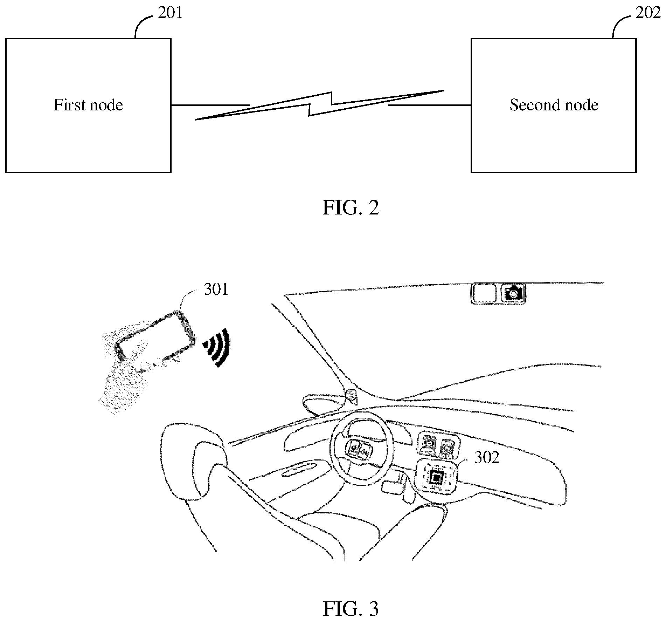

FIG. 2 is a diagram of a possible communication system according to an embodiment of this application. The communication system includes a first node 201 and a second node 202. The first node 201 may request to associate with the second node 202. After association succeeds, the second node 202 may perform data transmission with the first node 201.

Optionally, a link for communication between the second node 202 and the first node 201 may include various types of connection media, including a wired link (for example, an optical fiber), a wireless link, a combination of a wired link and a wireless link, or the like. For example, the second node 202 and the first node 201 may communicate with each other by using a short-range connection technology, including SparkLink (SparkLink), 802.11b/g, Bluetooth (Bluetooth), ZigBee (ZigBee), a radio frequency identification technology (radio frequency identification, RFID), an ultra-wideband (ultra-wideband, UWB) technology, a wireless short-range communication system (for example, a vehicle-mounted wireless short-range communication system), or the like. For another example, the second node 202 and the first node 201 may communicate with each other by using a long-range connection technology, for example, radio access type technologies including a long term evolution (Long Term Evolution, Long Term Evolution)-based communication technology, a fifth generation mobile communication technology (5th generation mobile network or 5th generation wireless system, 5th-Generation, 5G or 5G technology for short), a global system for mobile communications (global system for mobile communications, GSM), a general packet radio service (general packet radio service, GPRS), and a universal mobile telecommunications system (universal mobile telecommunications system, UMTS).

In some specific implementation scenarios, the second node may be referred to as a G node, a control node, or an access point (access point), the first node may be referred to as a T node or a terminal, a communication link from the G node to the T node may be referred to as a G link, and a communication link from the T node to the G node may be referred to as a T link.

It should be understood that systems shown in the accompanying drawings of this application are merely examples. A quantity of nodes, locations of nodes, and connection relationship between the nodes are shown as a possible case for ease of description, and are not intended to limit a specific communication system and a specific communication scenario.

The second node 202 and the first node 201 may be devices of a same type, or may be devices of different types. For example, FIG. 3 is a diagram of a possible communication scenario. A cockpit domain controller (cockpit domain controller, CDC) 302 of a vehicle is a control center in an intelligent cockpit device of the vehicle, and may be considered as the second node 202. A smartphone 301 is a device having a data receiving and sending capability, and may be considered as the first node 201.

The CDC 302 may be accessed by using a short-range communication technology, and the smartphone 301 supports the short-range communication technology. Therefore, the smartphone 301 may request to access the CDC 302. If both communication parties in the short-range communication technology perform access through digital pairing, an identifier of the CDC 302 is directly tapped on the smartphone 301, and a pairing digit between the smartphone 301 and the CDC 302 is confirmed, so that the smartphone 301 can be connected to the CDC 302 by using the short-range communication technology. In this case, if an attacker forges an identity of the smartphone 301 to connect to the CDC 302, it is difficult for the CDC 302 to identify the attacker. As a result, the attacker successfully accesses the CDC 302, and privacy and security of the vehicle are threatened.

Similarly, in some other scenarios, it is difficult for a node to avoid access of an unidentified attacker. As a result, communication security is affected. For example, the CDC 302 supports access through a first password. A user enters a password on the smartphone 301. When determining that the password entered by the user is correct, the CDC 302 may perform connection. However, to facilitate input and memorization, a password is usually short. When the password is directly used to obtain a communication key in a communication process, an attacker may use brute force cracking or offline cracking to obtain a password for the CDC 302, threatening privacy and security of the vehicle.

In view of this, a communication method and apparatus in embodiments of this application are provided, to reduce a possibility that a node is successfully associated with an attacker with an untrusted identity, and improve node security.

The following describes in detail the method in embodiments of this application.

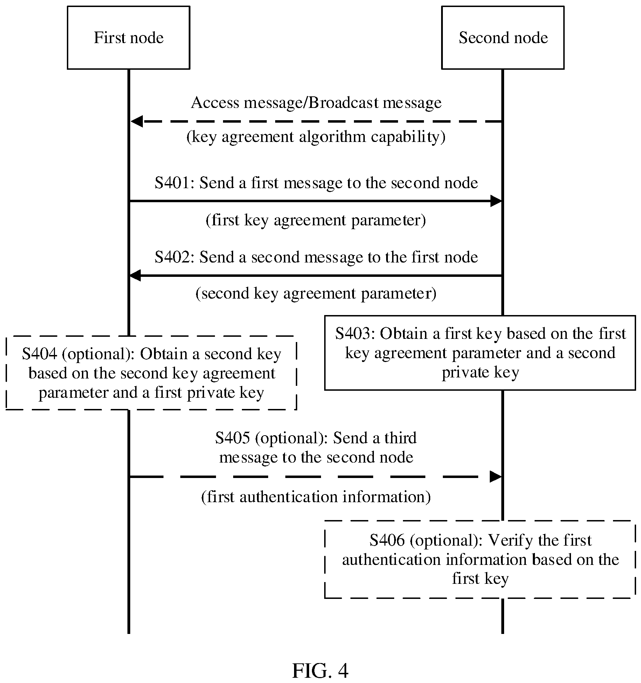

FIG. 4 is a schematic flowchart of a communication method according to an embodiment of this application. Optionally, the method may be implemented based on the communication system shown in FIG. 2. The communication method shown in FIG. 4 may include one or more of step S401 to step S406. It should be understood that, for ease of description in this application, a sequence from S401 to S406 is used for description, but this is not intended to constitute a limitation that the method is necessarily performed in the foregoing sequence. An execution sequence, execution time, a quantity of execution times, and the like of the foregoing one or more steps are not limited in this embodiment of this application. S401 to step S406 are specifically as follows.

Step S401: A first node sends a first message to a second node. Correspondingly, the second node receives the first message from the first node. The first message includes a first key agreement parameter.

Specifically, a key agreement parameter is a parameter used in a key agreement process. For ease of description, a key agreement parameter provided by the first node is referred to as the first key agreement parameter in this embodiment of this application.

In this embodiment of this application, the first key agreement parameter is associated with a first private key and an intermediate parameter, and the intermediate parameter is associated with a security parameter and a common parameter.

For ease of understanding, the following first describes the security parameter and the common parameter.

(1) The security parameter may include a shared key (including a pre-shared key, a symmetric encryption key, and the like) between the first node and the second node, a first password, a parameter preconfigured between the first node and the second node, a parameter predefined in a communication protocol, or the like. The pre-shared key (pre-shared key, PSK) is used as an example. The pre-shared key is a secret value shared between the first node and the second node. The first node may predefine, preconfigure, or obtain, through mutual agreement, the PSK shared with the first node, or the like.

The first password is an agreed access password between the first node and the second node, and may be understood as a password preconfigured or predefined by the second node (or the first node) to enable another node to access, or may be understood as a secret value agreed by the first node and the second node. For related descriptions of the first password, further refer to descriptions in the explanation part of technical terms.

In a possible solution, if a PSK between the first node and the second node exists in the first node, the PSK is used as the security parameter. If the PSK between the first node and the second node does not exist in the first node, the first password is used as the security parameter. In other words, the first node preferentially uses the PSK to participate in a key agreement process.

The first private key is determined by the first node, and is a private key of the first node. The first private key may be a random number. Optionally, when the first node and the second node perform key agreement according to a TBPEKE algorithm, a value range of the first private key is [1, p), where p is an order of an elliptic curve used by the TBPEKE algorithm, or p is an order of a group related to an elliptic curve. It should be understood that the "TBPEKE algorithm" is an example of an algorithm name provided in this embodiment of this application. In an implementation process, all key agreement algorithms using a same or similar parameter and a same or similar calculation manner fall within the scope of this application, although the key agreement algorithms may not be referred to as "TBPEKE algorithms".

(2) The common parameter may be jointly used by a plurality of parties in a key agreement process. There may be one or more common parameters. This depends on a specific implementation. Optionally, when the first node and the second node select different key agreement algorithms to perform key agreement, quantities and determining manners of common parameters may be different.

The following lists several possible common parameter determining implementations.

Implementation 1: The common parameter is predefined or preconfigured. For example, a quantity of common parameters, values of common parameters, and the like are defined in a protocol. When the first node is associated with the second node through the protocol, a key agreement parameter is determined based on the common parameter defined in the protocol. For example, the common parameter is preconfigured in a plurality of communication parties (for example, the first node and the second node). For example, the common parameter is preconfigured in the second node (or the first node), the second node may send the common parameter to another node via a message, and the plurality of communication parties determine a key agreement parameter based on the consistent common parameter.

Implementation 2: A node determines a parameter as the common parameter. A quantity of common parameters is not limited herein. Optionally, there may be one or more common parameters.

For example, the second node may generate a random number, and use the random number as the common parameter.

For another example, the second node determines two points in a group of a first elliptic curve, and uses the two points as common parameters. For example, the first node selects a point as a basis point (which is referred to as a first basis point for ease of differentiation), and obtains a second point (which may be referred to as a second basis point) by performing an operation on the basis point.

Optionally, the group may be a group related to operations on the first elliptic curve, and the operations on the elliptic curve include one or more operations of an elliptic curve point multiplication operation, an elliptic curve point addition operation, and the like. Further, optionally, an order corresponding to the group is p, and p may be defined by a node, a standard, a vendor, or a user. The order p in embodiments of this application is optionally a prime number.

Implementation 3: Some common parameters are predefined, and some parameters are determined by a node.

For example, there may be two common parameters, one common parameter is predefined, and the other common parameter is determined based on the known common parameter and random numbers separately provided by the first node and the second node.

In a possible implementation, when a key agreement algorithm between the first node and the second node is a TBPEKE algorithm, at least one common parameter includes a group (or some elements in the group) whose order is p, and/or a first basis point and a second basis point in the group. Optionally, the group may be a group related to operations on the first elliptic curve, and the operations on the elliptic curve include one or more operations of an elliptic curve point multiplication operation, an elliptic curve point addition operation, and the like.

In another possible implementation, the second node may receive a first calculated value from the first node, where the first calculated value is related to a first random number and a first common parameter, and the first random number is determined by the first node (in this embodiment of this application, "determining" includes one or more of operations such as obtaining through receiving, copying, reading, or generating). The first common parameter is predefined, for example, may be obtained through protocol stipulation, vendor configuration, or user input. The second node determines a second common parameter based on a second random number and the first calculated value. The second node sends a second calculated value to the first node, where the second calculated value is related to the second random number and the first common parameter. Further, the first node may receive the second calculated value from the first node, and obtain, based on the second calculated value and the first random number, the second common parameter consistent with that of the first node.

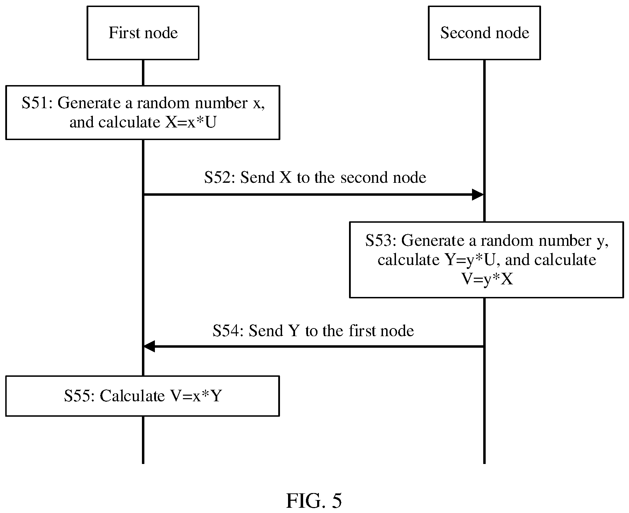

FIG. 5 shows a possible common parameter determining procedure according to an embodiment of this application. The common parameter includes two basis points U and V, U is a predefined basis point, U and V belong to a cyclic group whose order is p, and p is a prime number. A used elliptic curve may be an elliptic curve defined by a selected key agreement algorithm. The procedure shown in FIG. 5 may specifically include step S51 to step S55 that are specifically as follows.

Step S51: The first node generates a random number x, and calculates X=x*U.

**[0314]** * is a point multiplication operation, and X is the foregoing first calculated value.

Step S52: The first node sends X to the second node. Correspondingly, the second node receives X from the first node.

Step S53: The second node generates a random number y, calculates Y=y*U, and calculates V=y*X.

"*" is a point multiplication operation, Y is the foregoing second calculated value, and V is the second basis point. Optionally, because X=x*U, V=y*X=y*(x*U)=(x.y)*U, where "." is a multiplication operation.

Step S54: The second node sends Y to the first node. Correspondingly, the first node receives Y from the second node.

Step S55: The first node calculates V=x*Y.

Because Y=y*U, V=x*Y=x*(y*U)=(x.y)*U, where "." is a multiplication operation. Therefore, the second node and the first node may determine consistent Vs by using the embodiment shown in FIG. 5. It should be noted that, for ease of description, FIG. 5 is described in a sequence from step S51 to step S52. An execution sequence, execution time, and a quantity of execution times of steps are not limited in this application.

The foregoing describes the common parameter and the security parameter. The following provides two possible solutions for the first key agreement parameter by using an example in which a key agreement algorithm is a TBPEKE algorithm.

Solution 1: The first node calculates an intermediate parameter b based on a first password pw and common parameters (U and V), that is, b = (U + pw * V), where U and V are a first basis point and a second basis point on an elliptic curve used by the TBPEKE algorithm. The first node generates a random number and uses the random number as a first private key SKt, and calculates a first public key PKt, where PKt = SKt * b = SKt * (U + pw * V), and the first public key PKt is used as a key agreement parameter KEt.

In some possible designs, a point addition operation and a point multiplication operation may be performed on points on a same elliptic curve. Therefore, if a parameter is not a point on the elliptic curve, the parameter may be first mapped to a point on the elliptic curve, and then a point addition operation (or a point multiplication operation) is performed on the point on the elliptic curve. The first private key SKt is used as an example. A possible mapping method is as follows: The first node may use SKt as a horizontal coordinate (if SKt exceeds a definition domain, a modulo operation may be performed on SKt), and obtain a mapping point R(SKt, y) on the elliptic curve, where the point R may be subsequently used to replace SKt. Optionally, when one SKt value corresponds to a plurality of y values, a condition that needs to be met by the y values may be agreed on in advance, to determine corresponding points.

Solution 2: The first node calculates an intermediate parameter b based on the PSK and common parameters (U and V), that is, b = (U + PSK * V), where + represents an elliptic curve point addition operation, and * represents an elliptic curve point multiplication operation. The first node generates a random number and uses the random number as a first private key SKt, and calculates a first public key PKt, where PKt = SKt * (U + PSK * V), and the first public key PKt is used as a key agreement parameter KEt.

It should be noted that, to more clearly describe the solutions, a plurality of steps are used in the foregoing solutions to explain how to obtain the key agreement parameter KEt. In actual processing, the key agreement parameter KEt may be obtained in one step, and the intermediate parameter, the first public key, and the like may be only internal results, that is, the key agreement parameter KEt satisfies: KEt = SKt * (U + s * V).

Optionally, the first node may further send indication information of a key agreement algorithm to the second node, to indicate an algorithm used in a key agreement process. The indication information may be specifically indicated by a field (referred to as a first field for ease of description). For example, the first field may be a KE alg field. Different values of the first field may indicate algorithms used by the first node in the key agreement process. Optionally, the indication information of the key agreement algorithm may alternatively be included in the foregoing first message.

Table 1 shows possible values and descriptions of indication information of key agreement algorithms according to an embodiment of this application. As shown in Table 1, when a value of the first field is 0x003, it indicates that key agreement is performed according to a TBPEKE algorithm, and an elliptic curve used by the TBPEKE algorithm is an elliptic curve defined by an SM2 algorithm. Similarly, when a value of the first field is 0x001, it indicates that the first node selects the SM2 algorithm for key agreement. Meanings of other values are deduced by analogy. Details are not described herein.

Table 1 Possible values and descriptions of the first field

| Value | Description |
| --- | --- |
| 0x001 | SM2 |
| 0x002 | ECDH, an elliptic curve based on Curve25519 |

(continued)

| Value | Description |
|---|---|
| 0x003 | TBPEKE, an elliptic curve based on SM2 |
| 0x004 | TBPEKE, an elliptic curve based on Curve25519 |
| ... | ... |

It should be understood that Table 1 shows examples of field values, and does not represent a limitation on the indication information. In a specific implementation process, other designs may be used for correspondences between algorithms and formats, a quantity of bits, and values of the indication information.

In a possible solution, the second node may send (a sending manner may include broadcast, multicast, unicast, or the like) a key agreement algorithm capability of the second node, where the key agreement algorithm capability represents a key agreement algorithm supported by the second node. Correspondingly, the first node selects a key agreement algorithm based on the key agreement algorithm supported by the second node. The first node sends the indication information of the key agreement algorithm to the second node, where the indication information indicates the key agreement algorithm selected by the first node.

Optionally, the second node includes, in a broadcast message (or referred to as an access message), an identity of the second node and the key agreement algorithm supported by the second node. Key agreement algorithms are sorted according to a priority sequence. For example, an algorithm with a higher priority may be ranked top. The identity of the second node includes an identity (identify, ID), a domain ID (domain ID), a media access control (media access control, MAC) address, a domain name, a domain address, or another user-defined identifier of the second node, and is also referred to as a device identifier of the second node.

For ease of understanding, the following provides a possible solution as an example. The second node supports the SM2 algorithm (identifier: 0x001), the ECDH algorithm (identifier: 0x002), the SM2-based elliptic curve TBPEKE algorithm (identifier: 0x003), and the Curve25519-based elliptic curve TBPEKE algorithm (identifier: 0x004), and priorities of the four algorithms are 1, 2, 3, and 4 respectively (a larger value indicates a higher priority). In this case, the key agreement algorithm capability that is of the second node and that is in the broadcast message is "0x004, 0x003, 0x002, and 0x001".

In a possible solution, the first key agreement algorithm is a key agreement algorithm supported by the first node, and the first key agreement algorithm has a highest priority in key agreement algorithms supported by the second node. For example, the key agreement algorithms supported by the second node are an algorithm A, an algorithm B, an algorithm C, and an algorithm D, and priorities of the four algorithms are 4, 3, 2, and 1 respectively (a larger value indicates a higher priority); and key agreement algorithms supported by the first node are the algorithm B, the algorithm D, and an algorithm E. In this case, algorithms supported by both the first node and the second node are the algorithm B and the algorithm D. Because the algorithm B has a higher priority, the first node selects the algorithm B as an algorithm used in key agreement.

Certainly, the first node may select an algorithm that has a highest priority in key agreement algorithms supported by the first node and that is supported by both the first node and the second node. For example, the key agreement algorithms supported by the second node are an algorithm A, an algorithm B, an algorithm C, and an algorithm D, and priorities of the four algorithms are 4, 3, 2, and 1 respectively (a larger value indicates a higher priority); and key agreement algorithms supported by the first node are the algorithm B, the algorithm D, and an algorithm E, and priorities of the three algorithms are 1, 2, and 3 respectively (a larger value indicates a higher priority). In this case, algorithms supported by both the first node and the second node are the algorithm B and the algorithm D. Because in the second node, a priority of the algorithm D is higher than a priority of the algorithm B, the first node selects the algorithm D as an algorithm used in key agreement.

Optionally, there may be another configuration for setting priorities. For example, priorities of various algorithms are specified in a protocol, and an algorithm to be used is determined based on the priorities specified in the protocol.

Optionally, the first message may further include a fresh parameter (fresh value). For ease of differentiation, a fresh parameter provided by the first node is referred to as a first fresh parameter below. The fresh parameter includes at least one of a random number (for example, NONCE), a count value, a sequence number, and the like. In embodiments of this application, an example in which a fresh parameter includes NONCE is used for description. However, this application is applicable to all types of fresh parameters. For ease of description, the first fresh parameter is represented by NONCEt.

Optionally, the first message further includes an identity of the first node. The identity of the first node includes an ID, a MAC address, a domain name, a domain address, or another user-defined identifier of the first node, and is also referred to as a device identifier of the first node.

It should be noted that, in a specific scenario, the first message may be referred to as an access request message (or access request information), or may be referred to as an association request message (or association request information). A name of a message or information is not limited in embodiments of this application, only message content is described and expressed as an example, and the name of the message may be replaced.

It should be understood that, in this application, to facilitate description of parameter transfer, a first message, a second message, and the like are used as carriers for carrying data. In a specific implementation process, the first message may be one message, or may be a plurality of messages, and a quantity of messages included in the first message may not be limited. Similarly, a quantity of messages included in a subsequent second message and a quantity of messages included a subsequent third message may not be limited. For example, when the first node sends the first key agreement parameter and the first fresh parameter to the second node, the first key agreement parameter may be carried in a message 1, and the first fresh parameter may be carried in a message 2. In this case, the message 1 and the message 2 are included in the first message.

Step S402: The second node sends a second message to the first node. Correspondingly, the first node receives the second message from the second node. The second message includes a second key agreement parameter.

Specifically, in embodiments of this application, a key agreement parameter provided by the second node is referred to as the second key agreement parameter. The second key agreement parameter is associated with a second private key and the intermediate parameter, and the intermediate parameter is associated with the security parameter and the common parameter.

The second private key is a private key determined by the second node. The second private key may be a random number generated by the second node. Optionally, when the first node and the second node perform key agreement according to a TBPEKE algorithm, a value range of the second private key is [1, p), where p is an order of an elliptic curve used by the TBPEKE algorithm, or p is an order of a group. For detailed descriptions of the security parameter and the common parameter, refer to related descriptions in step S401.

In a possible solution, the second key agreement parameter may be represented by using the following formula: KEg = SKg * b, where b = (U + s * V), SKg is the second private key, b is the intermediate parameter, U and V are common parameters, and s is the security parameter. Alternatively, the second key agreement parameter is represented by using the following formula: KEg = SKg * (U + s * V).

Optionally, the second message further includes a fresh parameter. For ease of description, in embodiments of this application, a fresh parameter provided by the second node is referred to as a second fresh parameter, and is represented by NONCEg in some embodiments.

Step S403: The second node obtains a first key based on the first key agreement parameter and the second private key. The first key is associated with the first key agreement parameter and the second private key.

In a possible solution, the second node obtains the first key in the following manner: first key = SKg * KEt, where SKg is the second private key, and KEt is the first key agreement parameter. Because the first key agreement parameter KEt satisfies the following formula: KEt = SKt * (U + s * V), the first key $K_{KE}$ may satisfy the following formula:

$$K_{KE} = SKg * KEt = (SKt.SKg) * (U + s * V).$$

For ease of description, the foregoing separately describes a process of determining the first private key and a process of calculating the first key. However, in some specific designs, the foregoing calculation processes may be encapsulated into one calculation procedure, input of the calculation procedure is the first key agreement parameter, and output of the calculation procedure is the first key.

Alternatively, the foregoing procedure of obtaining the first key is indicated by a TBPEKE algorithm. Therefore, the foregoing step may alternatively be expressed as follows: The second node obtains the first key based on the TBPEKE algorithm and the first key agreement parameter.

Optionally, the first key may be further used to obtain one or more keys. In a possible solution, the first key may be used to obtain, through derivation, an encryption key, an integrity key, an identity authentication key, or the like. For example, the second node may calculate a key Kgt based on the first key. For example, Kgt = KDF($K_{KE}$, NONCEt, NONCEg), where NONCEt is the fresh parameter provided by the first node, and NONCEg is the fresh parameter provided by the second node.

In a possible implementation, the first key may be used to generate identity authentication information, to authenticate identities of both communication parties.

For example, the second node may obtain second identity authentication information based on the first key, where the second authentication information is used to authenticate an identity of the second node, and/or is used to verify whether keys obtained through agreement between the first node and the second node are consistent. That is, the second identity authentication information is associated with the first key.

In some possible designs, the second authentication information may be further associated with one or more of the following parameters: the key Kgt, the PSK, the first fresh parameter, the second fresh parameter, the first message, and the second message. The foregoing messages each may be an entire message, or may be some data in a message. The following lists several possible calculation manners of the second authentication information.

Calculation manner 1: The second authentication information AUTHg satisfies: AUTHg=AUF($K_{KE}$), where $K_{KE}$ is the first key. Certainly, in addition to $K_{KE}$, another parameter, for example, a fresh parameter or a message, may be further used to generate AUTHg. For example, AUTHg satisfies: AUTHg=AUF($K_{KE}$, NONCEg), satisfies AUTHg=AUF($K_{KE}$, NONCEt), or satisfies AUTHg=AUF($K_{KE}$, NONCEt, NONCEg).

Calculation manner 2: The second authentication information AUTHg satisfies: AUTHg=AUF(PSK), where the PSK herein is the PSK between the second node and the first node. Alternatively, the PSK may be a PSK that is stored in the second node and that corresponds to the identity of the first node.

Certainly, in addition to the PSK, another parameter, for example, a fresh parameter or a message, may be further used to generate AUTHg. For example, AUTHg satisfies: AUTHg=AUF(PSK, NONCEg), satisfies AUTHg=AUF(PSK, NONCEt), or satisfies AUTHg=AUF(PSK, NONCEt, NONCEg).

Calculation manner 3: The second authentication information AUTHg satisfies: AUTHg=AUF(PSK, $K_{KE}$, NONCEg, first message). For related parameters, refer to the foregoing descriptions.

Calculation manner 4: Because a quantity of bits of an output value of an AUF algorithm may be large, the second node may select some bits of the output value, so that the second authentication information has a uniform and short quantity of data bits. This can reduce a data size of the second message and improve transmission efficiency. For example, AUTHg=AUF(PSK)$|_{N \text{ bits}}$.

The N bits may be predefined or preconfigured by an OEM, a manufacturer, a standard, or a user. For example, the N bits may be most significant 32 bits, that is, AUTHg satisfies: AUTHg=AUF(PSK, $K_{KE}$, NONCEg, first message)$|_{\text{most significant 32 bits}}$. For example, the N bits may be least significant 16 bits, and AUTHg satisfies: AUTHg=AUF(PSK, NONCEg)$|_{\text{least significant 16 bits}}$.

Calculation manner 5: An authentication information key Kauth is obtained based on the first key $K_{KE}$, that is, Kauth=KDF($K_{KE}$). Optionally, a parameter used to generate Kauth may further include one or more of a fresh parameter (for example, NONCEt or NONCEg), a random number, the PSK, the identity of the first node, or the like.

An identity authentication key may be used to generate the second authentication information. Certainly, another parameter, for example, a fresh parameter or a message, may be further used to generate the second authentication information. In a possible solution, the second authentication information AUTHg satisfies: AUTHg=AUF(Kauth, NONCEg, first message)$|_{N_{bits}}$.

It should be understood that, in the algorithm in this application, a sequence of parameters is merely an example. In a specific implementation process, an input sequence of parameters may be changed. Alternatively, the AUF algorithm used to generate authentication information may be replaced with another cryptographic algorithm, for example, a KDF algorithm, an encryption algorithm, or an authentication algorithm.

In the foregoing description, the second node uses the PSK in some solutions, to obtain the second authentication information and the second key agreement parameter. The following describes two manners of obtaining the PSK by way of example.

Manner 1: A correspondence between the PSK and the identity of the first node exists in the second node. That is, in the second node, the PSK between the first node and the second node may correspond to the identity of the first node. The second node may obtain a corresponding PSK based on the identity of the first node and the correspondence (which may be referred to as a first correspondence for ease of differentiation).

Optionally, the correspondence between the PSK and the identity of the first node may be a correspondence preconfigured and predefined in the second node, or may be a correspondence stored after the first node and the second node generate the PSK through agreement. The correspondence may be in a form of one or more of a correspondence set, a data table, a database, and the like. This is not limited in this application. Table 2 shows a possible correspondence set between PSKs and identities of the first node according to this embodiment of this application. The correspondence set includes a plurality of identities of the first node, corresponding PSKs, and PSK types. For example, for the first node whose identity is an "ID 1", the second node may determine, based on a temporary ID "ID 1.1", that a PSK corresponding to the first node is a "PSK 1". Further, a type of the "PSK 1" is preconfigured.

**Table 2 Correspondences between PSKs and identities of the second node**

| Identity | PSK | Type |
|---|---|---|
| ID 1 (temporary ID 1.1) | PSK 1 | Preconfigured |
| ID 2 (temporary ID 2.1) | PSK 2 | Generated |
| ID 3 (temporary ID 3.1) | PSK 3 | Generated |

It should be noted that, when the correspondence is preconfigured, a PSK that is between the second node and the first node and that is preconfigured in the second node is the same as a PSK that is between the first node and the second node and that is preconfigured in the first node. When the correspondence is stored after a PSK is generated, a method for generating a PSK by the first node and parameters used by the first node are also the same as a method for generating a PSK by the second node and parameters used by the second node.

Manner 2: The second node generates the PSK between the second node and the first node. Optionally, a parameter used to generate the PSK may include one or more of the first password, the first fresh parameter, the second fresh parameter, the identity of the first node, the identity of the second node, or the like. It should be understood that a parameter used by the second node to generate the PSK and a parameter used by the first node to generate the PSK should be consistent.

In some scenarios, the second message may be referred to as a security context request message (or security context request information).

Step S404 (optional): The first node obtains a second key based on the second key agreement parameter and the first private key.

The second key corresponds to the second key agreement parameter and the first private key, and is a key obtained by the first node in the key agreement process.

Specifically, the first private key is a private key determined by the first node, and is used to obtain the first key agreement parameter in step S401. The first private key may be a random number generated by the first node. Optionally, when the first node and the second node perform key agreement according to a TBPEKE algorithm, a value range of the first private key is [1, p), where p is an order of an elliptic curve used by the TBPEKE algorithm, or p is an order of a group, and the group is related to an elliptic curve.

In a possible solution, the first node obtains the second key in the following manner: second key = SKt * KEg, where SKt is the first private key, and KEg is the second key agreement parameter. Because the second key agreement parameter KEg satisfies the following formula: KEg = SKg * (U + s * V), the second key $K_{KE}$ (which is referred to as $K_{KE}$' for ease of distinguishing from the first key $K_{KE}$) may satisfy the following formula:

$$K_{KE}' = SKt * KEg = (SKt.SKg) * (U + s * V).$$

Because $K_{KE}$=(SKt, SKg) * (U + s * V)=$K_{KE}$', the first node and the second node obtain consistent keys $K_{KE}$ by exchanging key agreement parameters.

For ease of description, the foregoing separately describes a process of determining the second private key and a process of calculating the second key. However, in some specific designs, the foregoing calculation processes may be encapsulated into one calculation procedure, input of the calculation procedure is the second key agreement parameter, and output of the calculation procedure is the second key.

In another possible solution, the foregoing procedure of obtaining the second key is indicated by a TBPEKE algorithm. Therefore, the foregoing step may alternatively be expressed as follows: The first node obtains the second key based on the TBPEKE algorithm and the second key agreement parameter.

Optionally, the second key may be used to obtain one or more keys. In a possible solution, the second key may be used to obtain an encryption key, an integrity key, an identity authentication key, and the like.

For example, the first node may obtain a key Kgt through calculation based on the second key. For example, Kgt = KDF($K_{KE}$', NONCEt, NONCEg), where NONCEt is the fresh parameter provided by the first node, and NONCEg is the fresh parameter provided by the second node.

In a possible implementation, the first key may be used to generate identity authentication information, to authenticate identities of both communication parties. For example, the possible implementation is shown in step S405 and step S406.

Step S405 (optional): The first node sends a third message to the second node. Correspondingly, the second node receives the third message from the first node. The third message includes first authentication information.

The first authentication information is used to authenticate the identity of the first node, and/or is used by the second node to verify whether keys obtained through agreement between the second node and the first node are consistent. The first authentication information is associated with the second key.

In some possible designs, an optional parameter used to generate the first authentication information may further include one or more of the key Kgt, the PSK, the first fresh parameter, the second fresh parameter, the first message, and the second message. The foregoing messages each may be an entire message, or may be some data in a message. The following lists several possible calculation manners of the first authentication information.

Calculation manner 1: The first authentication information AUTHt satisfies: AUTHt=AUF($K_{KE}$'), where $K_{KE}$' is the second key. Certainly, in addition to $K_{KE}$, another parameter, for example, a fresh parameter or a message, may be further used to generate AUTHt. For example, AUTHt satisfies: AUTHt=AUF($K_{KE}$', NONCEt), satisfies AUTHt=AUF($K_{KE}$', NONCEg), or satisfies AUTHt=AUF($K_{KE}$', NONCEt, NONCEg).

Calculation manner 2: The first authentication information AUTHt satisfies: AUTHt=AUF(PSK), where the PSK herein is the PSK between the second node and the first node, or the PSK may be a PSK that is stored in the first node and that corresponds to the identity of the second node.

Certainly, in addition to the PSK, another parameter, for example, a fresh parameter or a message, may be further used to generate AUTHt. For example, AUTHt satisfies: AUTHt=AUF(PSK, NONCEg), satisfies AUTHt=AUF(PSK, NONCEt), or satisfies AUTHt=AUF(PSK, NONCEt, NONCEg).

Calculation manner 3: The first authentication information AUTHt satisfies: AUTHt=AUF(PSK, $K_{KE}$', second message, NONCEt, key agreement algorithm capability of the first node). For related parameters, refer to the foregoing descriptions.

Calculation manner 4: Because a quantity of bits of an output value of an AUF algorithm may be large, the first node may select some bits of the output value, so that the first authentication information has a uniform and short quantity of data bits. This can reduce a data size of the third message and improve transmission efficiency. For example, AUTHt=AUF(PSK)$|_{N\ bits}$.

The N bits may be predefined or preconfigured by an OEM, a manufacturer, a standard, or a user. For example, the N bits may be most significant 32 bits, that is, AUTHt satisfies: AUTHt=AUF(PSK, $K_{KE}$', second message, NONCEt, key agreement algorithm capability of the first node)$|_{most\ significant\ 32\ bits}$. For example, the N bits may be least significant 16 bits, and AUTHt satisfies: AUTHt=AUF(PSK, NONCEg)$|_{least\ significant\ 16\ bits}$.

Calculation manner 5: An authentication information key Kauth is obtained based on the second key $K_{KE}$', that is, Kauth=KDF($K_{KE}$'). Optionally, a parameter used to generate Kauth may further include one or more of a fresh parameter (for example, NONCEt or NONCEg), a random number, the PSK, the identity of the first node, or the like.

An identity authentication key may be used to generate the first authentication information. Certainly, another parameter, for example, a fresh parameter or a message, may be further used to generate the first authentication information. In a possible solution, the first authentication information AUTHt satisfies: AUTHt=AUF(Kauth, NONCEt, second message, key agreement algorithm capability of the first node)$|_{N\ bits}$.

Alternatively, the AUF algorithm used to generate authentication information may be replaced with another cryptographic algorithm, for example, a KDF algorithm, an encryption algorithm, or an authentication algorithm.

Optionally, when the second message includes the second authentication information AUTHg, the first node may verify the second authentication information AUTHg based on the second key. If the first node verifies that the second authentication information AUTHg is correct, the first node generates the first authentication information AUTHt.

In a possible solution, the second node uses, to generate verification information, a parameter that is obtained by the second node and that is the same as a parameter used by the second node to generate AUTHg. If the verification information is consistent with AUTHg, the first node verifies that the second authentication information AUTHg is correct. If the verification information is inconsistent with AUTHg, verification performed by the first node on the second authentication information AUTHg fails.

Further, the second message may further include integrity verification information, and the first node may verify integrity of the second information based on the integrity verification information. If verification on the second authentication information and the integrity of the second message succeeds, the first node generates the authentication information AUTHt.

The first node may obtain the PSK according to a correspondence, or may generate the PSK based on a parameter. For related descriptions, refer to descriptions on a second node side in step S402. Details are not described herein again.

In some scenarios, the third message may be referred to as a security context response message (or security context response information).

Step S406 (optional): The second node verifies the first authentication information based on the first key.

In an optional solution, the second node should use, to generate verification information, a parameter that is the same as a parameter used by the first node to generate the first authentication information. If the verification information is the same as the first authentication information, verification succeeds.

For example, if the first authentication information AUTHt satisfies: AUTHt=AUF(PSK, $K_{KE}$' , NONCEt, second message)$|_{most\ significant\ 32\ bits}$, the second node generates verification information check1=AUF(PSK, $K_{KE}$, NONCEt, second message)$|_{most\ significant\ 32\ bits}$, and if the verification information check1 is the same as AUTHt, verification succeeds.

In a possible solution, if verification on the first authentication information succeeds, the second node sends an association establishment message to the first node. Correspondingly, the first node receives the association establishment message, and may establish an association with the second node.

In another possible solution, if verification on the first authentication information fails, the second node may disconnect a communication connection from the first node, and discard the first message, discard the third message, or the like. For example, if verification on the first authentication information fails, it indicates that the first key $K_{KE}$ in the second node is different from the second key $K_{KE}$' in the first node. Therefore, the identity of the first node is untrusted, and the first node may be a node masqueraded by an attacker. In this case, a communication connection between the first node and the second node is disconnected, to avoid access of an untrusted node.

Optionally, one or more of the first message, the second message, the third message, the association establishment message, and the like may include a message authentication code (message authentication code, MAC). The message authentication code is information (or a small segment of information) generated by using a specific algorithm, and may be used to verify integrity of a segment of message. Optionally, the message authentication code may be further used for identity authentication. Therefore, a receiver may verify integrity of a message based on the message authentication code.

Optionally, when the second node determines an encryption key, the association establishment message may be further encrypted by using the encryption key, to obtain a ciphertext. Correspondingly, the second node determines a decryption key corresponding to the encryption key, and the decryption key may be used to decrypt the ciphertext, to obtain content in the association establishment message.

In the embodiment shown in FIG. 4, the second node first obtains the intermediate parameter based on the security parameter and the common parameter, and uses the intermediate parameter to generate the first key agreement parameter. The security parameter is not directly used to generate a key, and the security parameter is not directly used to generate a key agreement parameter. Therefore, even if the security parameter has a small quantity of bits, confidentiality of the security parameter may be improved by using the common parameter, to reduce a possibility that the security parameter is cracked. Correspondingly, security of the first key is improved. This can reduce a possibility that an attacker accesses the second node, and improve communication security and data security of the node.

Further, a security parameter obtained by the first node needs to be consistent with a security parameter in the second node. In this way, the first node and the second node may participate in generation of consistent keys by using consistent security parameters. Specifically, parameters used by the second node to generate the first key include the second private key, the security parameter (in the first node), the common parameter, and the first private key, and parameters used by the first node to generate the second key include the first private key, the security parameter (in the second node), the common parameter, and the second private key. Because the parameters used to generate the first key and the parameters used to generate the second key are the same, if the security parameter in the first node and the security parameter in the second node are consistent, a generated first key and a generated second key are consistent.

The first node may obtain the first authentication information based on the second key, and the second node verifies the authentication information based on the first key. If verification succeeds, it indicates that the first key is consistent with the second key, that is, the second node and the first node have a same security parameter. This indicates that the identity of the second node is trusted.

When an attacker requests to access the second node, because the attacker does not have a security parameter consistent with that of the second node, the attacker cannot generate a shared key consistent with that of the second node. Therefore, the attacker cannot access the second node. This can prevent the attacker from accessing the second node, and prevent the second node from being successfully associated with the attacker with an untrusted identity.

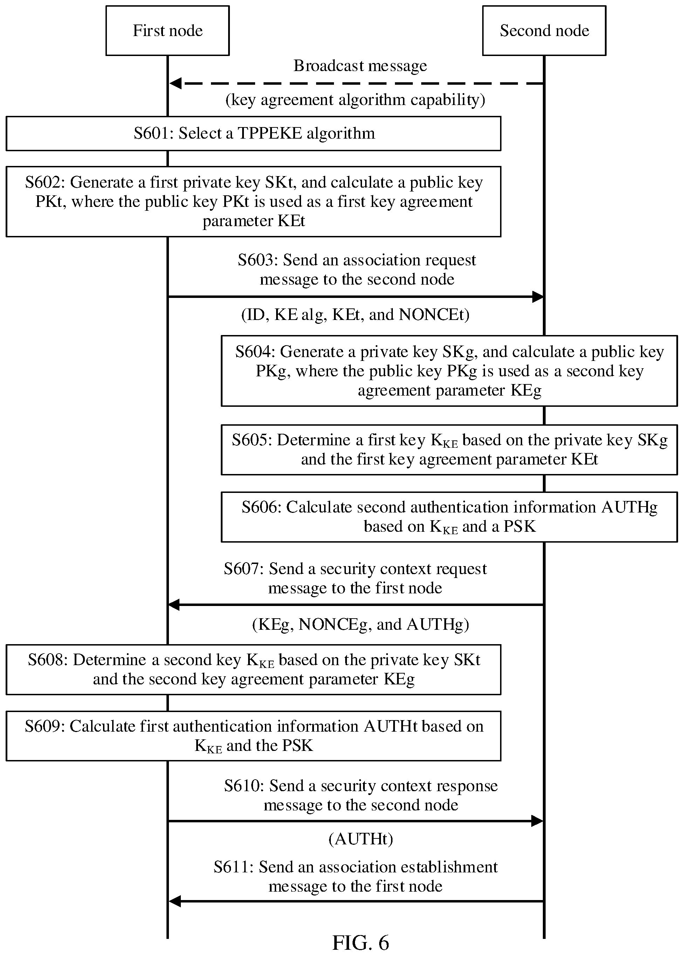

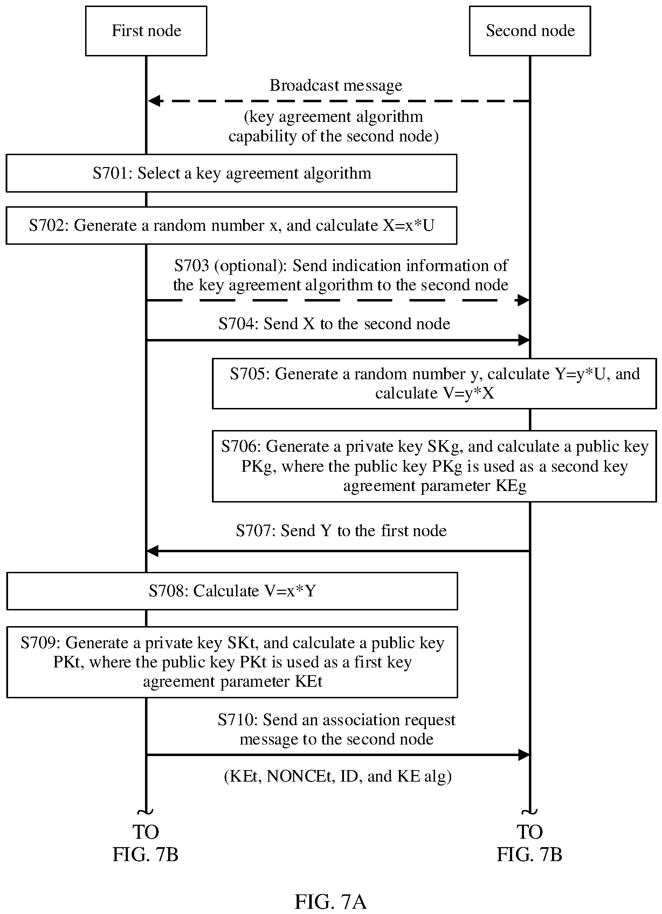

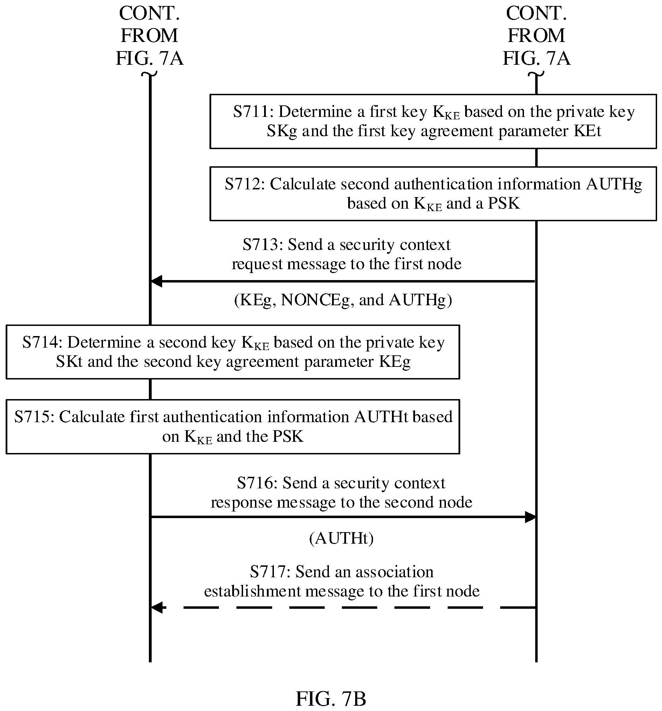

The method embodiment shown in FIG. 4 includes many possible implementation solutions. The following describes some of the implementation solutions by using examples with reference to FIG. 6, FIG. 7A, and FIG. 7B. It should be noted that, for related concepts, operations, or logical relationships that are not explained in FIG. 5, refer to corresponding descriptions in the embodiment shown in FIG. 4.

FIG. 6 is a method flowchart of a possible communication method according to an embodiment of this application. Further, the method may be implemented based on the architecture shown in FIG. 2. The communication method shown in FIG. 6 may include step S601 to step S611. It should be understood that, for ease of description in this application, a sequence from S601 to S611 is used for description, but this is not intended to constitute a limitation that the method is necessarily performed in the foregoing sequence. An execution sequence, execution time, a quantity of execution times, and the like of the foregoing one or more steps are not limited in this embodiment of this application. S601 to step S611 are specifically as follows.

Step S601: A first node selects a TPPEKE algorithm.

Specifically, the first node determines, from one or more key agreement algorithms, a key agreement algorithm used when the first node performs key agreement with a second node. For example, optional key agreement algorithms include SM2, ECDH (a Curve25519-based elliptic curve), TBPEKE (an SM2-based elliptic curve), and TBPEKE (a Curve25519-based elliptic curve).

In a possible solution, the key agreement algorithm selected by the first node includes a TPPEKE algorithm, that is, the TPPEKE algorithm is used as an algorithm for key agreement between the first node and the second node. An elliptic curve used by the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like. It should be understood that the foregoing is an example description for ease of describing TBPEKE algorithms using different elliptic curves. In a specific implementation process, other elliptic curves may alternatively be used. Examples are not enumerated herein.

Optionally, when the selected key agreement algorithm is the TBPEKE algorithm, at least one common parameter includes a group (or some elements in the group) whose order is p, and/or two basis points in the group, for example, the foregoing first basis point and the second basis point. The group is related to the elliptic curve used by the TBPEKE algorithm.

In a possible design, the second node adds a key agreement algorithm supported by the second node to a broadcast message. Key agreement algorithms supported by the second node are sorted according to a priority sequence, and an algorithm with a higher priority may be ranked top. The first node selects the key agreement algorithm based on a key agreement algorithm capability of the second node. In some possible designs, the algorithm selected by the first node is a key agreement algorithm supported by both the first node and the second node, and has a highest priority in the key agreement algorithms supported by the second node.

Step S602: The first node generates a first private key SKt, and calculates a public key PKt, where the public key PKt is used as a first key agreement parameter KEt.

Specifically, the first node generates a random number and uses the random number as the private key SKt, where $1 \leq SKt < p$.

The first node calculates b (an intermediate parameter) based on pw (a first password), and U and V (common parameters), where $b = (U + pw * V)$. The first node calculates the public key PKt based on b and the private key SKt, where $PKt = SKt * b$.

The first node uses the public key PKt as the first key agreement parameter KEt.

Step S603: The first node sends an association request message to the second node. The association request message carries an ID of a T-node, indication information KE alg of an algorithm, the first key agreement parameter KEt, and a random number NONCEt.

KE alg indicates the key agreement algorithm selected by the first node. NONCEt is a random number determined by the first node.

Correspondingly, the second node receives the association request message from the first node.

Step S604: The second node generates a private key SKg, and calculates a public key PKg, where the public key PKg is used as a second key agreement parameter KEg.

Specifically, the second node generates a random number and uses the random number as the private key SKg, where $1 \leq SKg < p$.

The second node calculates b (the intermediate parameter) based on pw (the first password), and U and V (the common parameters), where $b = (U + pw * V)$. The second node calculates the public key PKg based on b and the private key SKg, where $PKg = SKg * b$.

The first node uses the public key PKg as the first key agreement parameter KEg.

Step S605: The second node determines a first key $K_{KE}$ based on the private key SKg and the first key agreement parameter KEt.

Specifically, the second node obtains the first key in the following manner: first key = SKg * KEt. Because the first key agreement parameter KEt satisfies the following formula: KEt = SKt * (U + pw * V), the first key $K_{KE}$ may satisfy the following formula:

$$K_{KE} = SKg * KEt = (SKt. SKg) * (U + pw * V).$$

Optionally, the second node may further obtain another derived key based on the first key $K_{KE}$. For example, the second node calculates a shared key Kgt based on the first key $K_{KE}$, the random number NONCEt, and a random number NONCEg, that is, the shared key Kgt=KDF($K_{KE}$, NONCEt, NONCEg).

Step S606: The second node calculates second authentication information AUTHg based on $K_{KE}$ and a PSK.

The PSK is a shared key between the second node and the first node, and may be generated based on a parameter such as a password, or may be preconfigured.

In a possible solution, the second authentication information is obtained through calculation in the following manner: AUTHg=AUF(PSK, $K_{KE}$)|$_{most}$ significant 32 $_{bits}$.

In still another possible solution, an optional parameter used to generate the second authentication information may further include one or more of the key Kgt, the PSK, a first fresh parameter, a second fresh parameter, the association request message, and a security context request message. For example, the second authentication information is obtained through calculation in the following manner: AUTHg=AUF(PSK, $K_{KE}$, NONCEg, association request message)|$_{most}$ significant 32 bits.

Optionally, the second node may further generate the random number NONCEg.

Step S607: The second node sends the security context request message to the first node. The security context request message carries the second key agreement parameter KEg, the random number NONCEg, and the second authentication information AUTHg.

Correspondingly, the first node receives the security context request message from the second node.

Step S608: The first node determines a second key $K_{KE}$ based on the private key SKt and the second key agreement parameter KEg.

Specifically, the first node obtains the second key in the following manner: second key = SKt * KEg. Because the second key agreement parameter KEg satisfies the following formula: KEg = SKg * (U + pw * V), the second key $K_{KE}$ may satisfy the following formula:

$$K_{KE} = SKt * KEg = (SKt. SKg) * (U + pw * V).$$

Because first key $K_{KE}$=(SKt, SKg) * (U + pw * V)=second key $K_{KE}$, the first node and the second node obtain consistent keys $K_{KE}$ by exchanging key agreement parameters.

Optionally, the first node may further obtain another derived key based on the second key $K_{KE}$. For example, the first node calculates a shared key Kgt based on the second key $K_{KE}$, the random number NONCEt, and the random number NONCEg, that is, the shared key Kgt=KDF($K_{KE}$, NONCEt, NONCEg).

Step S609: The first node calculates first authentication information AUTHt based on $K_{KE}$ and the PSK.

The PSK is a shared key between the second node and the first node, and may be generated based on a parameter such as a password, or may be preconfigured.

In a possible solution, the first authentication information is obtained through calculation in the following manner: AUTHt=AUF(PSK, $K_{KE}$)|$_{most}$ significant 32 $_{bits}$.

In still another possible solution, an optional parameter used to generate the first authentication information may further include one or more of the key Kgt, the PSK, the first fresh parameter, the second fresh parameter, the association request message, and the security context request message. For example, the first authentication information is obtained through calculation in the following manner:

AUTHt=AUF(PSK, $K_{KE}$, security context request message, NONCEt, key agreement algorithm capability of the second node)|$_{most}$ significant 32 bits.

In a possible solution, the first node verifies whether the second authentication information AUTHg is correct, and if the second authentication information AUTHg is correct, the first node generates the first authentication information AUTHt.

Optionally, the security context request message includes integrity verification information. If verification performed by the first node on the second authentication information AUTHg and integrity of the security context request message succeeds, the first node generates the first authentication information AUTHt.

Step S610: The first node sends a security context response message to the second node. The security context response message carries the first authentication information AUTHt.

Correspondingly, the second node receives the security context response message from the first node.

The second node verifies the first authentication information AUTHt. If the second node verifies that the first authentication information AUTHt is correct, the second node performs step S511.

Step S611: The second node sends an association establishment message to the first node.

In a possible solution, the security context response message includes the integrity verification information. When verification performed by the second node on the first authentication information AUTHt and integrity of the security context response message succeeds, the second node sends the association establishment message to the first node.

In the embodiment shown in FIG. 6, when the first node requests to access the second node, the first node may select a TBPEKE algorithm based on an elliptic curve theory to perform key agreement, and a common parameter selected by the first node in a key agreement process is located on an elliptic curve. Due to a discrete logarithm problem of the elliptic curve, it is easy to obtain the intermediate parameter through calculation based on the security parameter and the common parameter. However, it is difficult to crack the security parameter by obtaining the first key agreement parameter and the common parameter. Therefore, the TBPEKE algorithm and the common parameter are used, so that a possibility that the security parameter is cracked can be reduced, and node security can be improved.

When an attacker requests to access the second node, because the attacker does not have a security parameter consistent with that of the second node, the attacker cannot generate a shared key consistent with that of the second node. Therefore, the attacker cannot access the second node. This can prevent the attacker from accessing the second node, and prevent the second node from being successfully associated with the attacker with an untrusted identity.

FIG. 7A and FIG. 7B are a method flowchart of still another possible communication method according to an embodiment of this application. Further, the method may be implemented based on the architecture shown in FIG. 2. The communication method shown in FIG. 7A and FIG. 7B may include step S701 to step S717. It should be understood that, for ease of description in this application, a sequence from S701 to S717 is used for description, but this is not intended to constitute a limitation that the method is necessarily performed in the foregoing sequence. An execution sequence, execution time, a quantity of execution times, and the like of the foregoing one or more steps are not limited in this embodiment of this application. S701 to step S717 are specifically as follows.

Step S701 (optional): A first node selects a key agreement algorithm.

Specifically, the first node determines, from one or more key agreement algorithms, a key agreement algorithm used when the first node performs key agreement with a second node. For example, optional key agreement algorithms include SM2, ECDH (a Curve25519-based elliptic curve), TBPEKE (an SM2-based elliptic curve), and TBPEKE (a Curve25519-based elliptic curve).

In a possible solution, the key agreement algorithm selected by the first node includes a TPPEKE algorithm, that is, the TPPEKE algorithm is used as an algorithm for key agreement between the first node and the second node. An elliptic curve used by the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like. It should be understood that the foregoing is an example description for ease of describing TBPEKE algorithms using different elliptic curves. In a specific implementation process, other elliptic curves may alternatively be used. Examples are not enumerated herein.

Optionally, when the selected key agreement algorithm is the TBPEKE algorithm, at least one common parameter includes a group (or some elements in the group) whose order is p, and/or two basis points in the group, for example, the foregoing first basis point and the second basis point. The group is related to the elliptic curve used by the TBPEKE algorithm.

In a possible design, the second node adds a key agreement algorithm supported by the second node to a broadcast message. Key agreement algorithms supported by the second node are sorted according to a priority sequence, and an algorithm with a higher priority may be ranked top. The first node selects the key agreement algorithm based on a key agreement algorithm capability of the second node. In some possible designs, the algorithm selected by the first node is a key agreement algorithm supported by both the first node and the second node, and has a highest priority in the key agreement algorithms supported by the second node.

Step S702: The first node generates a random number x, and calculates $X=x*U$.

Optionally, step S703 is performed when the key agreement algorithm is the TPPEKE algorithm. U is a predefined basis point.

Optionally, U belongs to a group whose order is p (optionally, p may be a prime number), and an elliptic curve corresponding to the group is an elliptic curve used by the key agreement algorithm selected by the first node. For example, when the first node selects the TBPEKE (SM2-based elliptic curve) algorithm, U belongs to a point (namely, a second basis point) in a group that is related to an SM2-based elliptic curve and whose order is p.

Optionally, the first node may send information about a selected elliptic curve to the second node, to describe an elliptic curve related to a first common parameter.

Step 703 (optional): The first node sends indication information of the key agreement algorithm to the second node. Correspondingly, the second node receives the indication information of the key agreement algorithm from the first node.

For example, the key agreement algorithm selected by the first node is indicated by KE alg.

Alternatively, the first node may send, to the second node, a key agreement algorithm supported by the first node. Correspondingly, the second node may obtain, in a same selection manner as the first node, the key agreement algorithm selected by the first node.

Step S704: The first node sends X to the second node. Correspondingly, the second node receives X from the first node.

Optionally, X and the indication information of the key agreement algorithm may be carried in a same message, or may be sent by using different messages.

Step S705: The second node generates a random number y, calculates $Y=y*U$, and calculates $V=y*X$.

Step S706: The second node generates a private key SKg, and calculates a public key PKg, where the public key PKg is used as a second key agreement parameter KEg.

Specifically, the second node generates a random number and uses the random number as the private key SKg, where $1\leq SKg<p$.

The second node calculates b (an intermediate parameter) based on pw (a first password), and U and V (common parameters), where $b = (U + pw * V)$. The second node calculates the public key PKg based on b and the private key SKg, where $PKg = SKg * b$.

The first node uses the public key PKg as the first key agreement parameter KEg.

Step S707: The second node sends Y to the first node. Correspondingly, the first node receives Y from the second node.

Step S708: The first node calculates $V=x*Y$.

Step S709: Generate a private key SKt, and calculate a public key PKt, where the public key PKt is used as a first key agreement parameter KEt.

Specifically, the first node generates a random number and uses the random number as the private key SKt, where $1\leq SKt<p$.

The first node calculates b (the intermediate parameter) based on pw (the first password), and U and V (the common parameters), where $b = (U + pw * V)$. The first node calculates the public key PKt based on b and the private key SKt, where $PKt = SKt * b$.

The first node uses the public key PKt as the first key agreement parameter KEt.

Step S710: The first node sends an association request message to the second node. The association request message carries the first key agreement parameter KEt, a random number NONCEt, an ID of a T-node (optional), and the indication information KE alg of the algorithm (optional).

NONCEt is a random number determined by the first node.

Correspondingly, the second node receives the association request message from the first node.

Step S711: The second node determines a first key $K_{KE}$ based on the private key SKg and the first key agreement parameter KEt.

Specifically, the second node obtains the first key in the following manner: first key = SKg * KEt. Because the first key agreement parameter KEt satisfies the following formula: KEt = SKt * (U + pw * V), the first key $K_{KE}$ may satisfy the following formula:

$$K_{KE} = SKg * KEt = (SKt.SKg) * (U + pw * V).$$

Optionally, the second node may further obtain another derived key based on the first key $K_{KE}$. For example, the second node calculates a shared key Kgt based on the first key $K_{KE}$, the random number NONCEt, and a random number NONCEg, that is, the shared key Kgt=KDF($K_{KE}$, NONCEt, NONCEg).

Optionally, step S706 may be performed when (or after) step S711 is performed.

Step S712: The second node calculates second authentication information AUTHg based on $K_{KE}$ and a PSK.

The PSK is a shared key between the second node and the first node, and may be generated based on a parameter such as a password, or may be preconfigured.

In a possible solution, the second authentication information is obtained through calculation in the following manner: AUTHg=AUF(PSK, $K_{KE}$)|$_{most}$ significant 32 $_{bits}$.

In still another possible solution, an optional parameter used to generate the second authentication information may further include one or more of the key Kgt, the PSK, a first fresh parameter, a second fresh parameter, the association request message, and a security context request message. For example, the second authentication information is obtained through calculation in the following manner: AUTHg=AUF(PSK, $K_{KE}$, NONCEg, association request message)|$_{most}$ significant 32 bits.

Optionally, the second node may further generate the random number NONCEg.

Step S713: The second node sends the security context request message to the first node. The security context request message carries the second key agreement parameter KEg, the random number NONCEg, and the second authentication information AUTHg.

Correspondingly, the first node receives the security context request message from the second node.

Step S714: The first node determines a second key $K_{KE}$ based on the private key SKt and the second key agreement parameter KEg.

Specifically, the first node obtains the second key in the following manner: second key = SKt * KEg. Because the second key agreement parameter KEg satisfies the following formula: KEg = SKg * (U + pw * V), the second key $K_{KE}$ may satisfy the following formula:

$$K_{KE} = SKt * KEg = (SKt.SKg) * (U + pw * V).$$

Because first key $K_{KE}$=(SKt, SKg) * (U + pw * V)=second key $K_{KE}$, the first node and the second node obtain consistent keys $K_{KE}$ by exchanging key agreement parameters.

Optionally, the first node may further obtain another derived key based on the second key $K_{KE}$. For example, the first node calculates a shared key Kgt based on the second key $K_{KE}$, the random number NONCEt, and the random number NONCEg, that is, the shared key Kgt=KDF($K_{KE}$, NONCEt, NONCEg).

Step S715: The first node calculates first authentication information AUTHt based on $K_{KE}$ and the PSK.

The PSK is a shared key between the second node and the first node, and may be generated based on a parameter such as a password, or may be preconfigured.

In a possible solution, the first authentication information is obtained through calculation in the following manner: AUTHt=AUF(PSK, $K_{KE}$)|$_{most}$ significant 32 $_{bits}$.

In still another possible solution, an optional parameter used to generate the first authentication information may further include one or more of the key Kgt, the PSK, the first fresh parameter, the second fresh parameter, the association request message, and the security context request message. For example, the first authentication information is obtained through calculation in the following manner:
AUTHt=AUF(PSK, $K_{KE}$, security context request message, NONCEt, key agreement algorithm capability of the second node)|$_{most}$ significant 32 bits.

In a possible solution, the first node verifies whether the second authentication information AUTHg is correct, and if the second authentication information AUTHg is correct, the first node generates the first authentication information AUTHt.

Optionally, the security context request message includes integrity verification information. If verification performed by the first node on the second authentication information AUTHg and integrity of the security context request message succeeds, the first node generates the first authentication information AUTHt.

Step S716: The first node sends a security context response message to the second node. The security context response message carries the first authentication information AUTHt.

Correspondingly, the second node receives the security context response message from the first node.

The second node verifies the first authentication information AUTHt. If the second node verifies that the first authentication information AUTHt is correct, the second node performs step S511.

Step S717 (optional): The second node sends an association establishment message to the first node.

In a possible solution, the security context response message includes the integrity verification information. When verification performed by the second node on the first authentication information AUTHt and integrity of the security context response message succeeds, the second node sends the association establishment message to the first node.

In the embodiment shown in FIG. 7A and FIG. 7B, the first node and the second node obtain the common parameters U and V by exchanging random numbers and by using the elliptic curve defined by the TBPEKE algorithm. When the first node requests to access the second node, the first node may select the TBPEKE algorithm based on an elliptic curve theory to perform key agreement, and use U and V to generate a key agreement parameter in a key agreement process. Due to a discrete logarithm problem of the elliptic curve, it is easy to obtain the intermediate parameter through calculation based on the security parameter and the common parameter. However, it is difficult to crack the security parameter by obtaining the first key agreement parameter and the common parameter. Therefore, the TBPEKE algorithm and the common parameter are used, so that a possibility that the security parameter is cracked can be reduced, and node security can be improved.

When an attacker requests to access the second node, because the attacker does not have a security parameter consistent with that of the second node, the attacker cannot generate a shared key consistent with that of the second node. Therefore, the attacker cannot access the second node. This can prevent the attacker from accessing the second node, and prevent the second node from being successfully associated with the attacker with an untrusted identity.

In embodiments shown in FIG. 6, FIG. 7A, and FIG. 7B, the first password pw may be replaced with a PSK.

The foregoing describes in detail methods in embodiments of this application. The following provides apparatuses in embodiments of this application.

It may be understood that, to implement functions in the foregoing method embodiments, a plurality of apparatuses provided in embodiments of this application, for example, communication apparatuses, include a corresponding hardware structure, a corresponding hardware structure software unit, or a combination of a hardware structure and a software structure for performing the functions. A person skilled in the art should be easily aware that, in combination with examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may implement the foregoing method embodiments by using different apparatus implementations in different use scenarios, but it should not be considered that different implementations of the apparatus go beyond the scope of embodiments of this application.

In embodiments of this application, an apparatus may be divided into functional units. For example, the functional units may be obtained through division based on corresponding functions, or two or more functions may be integrated into one functional unit. The integrated module may be implemented in a form of hardware, or may be implemented in a form of a software functional unit. It should be noted that, in embodiments of this application, division into the units is an example, and is merely logical function division. In actual implementation, another division manner may be used.

The following lists several possible apparatuses.

The foregoing describes in detail methods in embodiments of this application. The following provides the apparatuses in embodiments of this application.

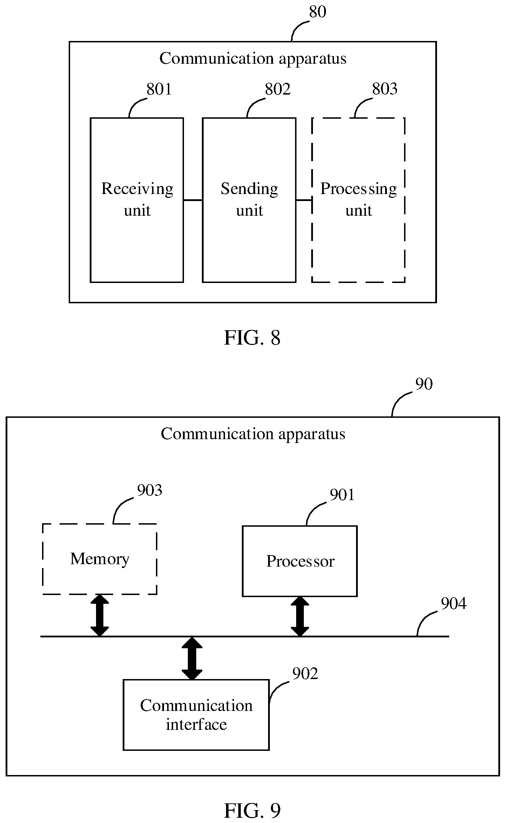

FIG. 8 is a diagram of a structure of a communication apparatus 80 according to an embodiment of this application. Optionally, the communication apparatus 80 may be an independent device, for example, a node. Alternatively, the communication apparatus 80 may be a component, for example, a chip or an integrated circuit, in an independent device (for example, a node).

The communication apparatus 80 may include one or more of a receiving unit 801, a sending unit 802, and a processing unit 803. The communication apparatus 80 is configured to implement the foregoing communication methods, for example, the communication method shown in FIG. 4, FIG. 6, or FIG. 7A and FIG. 7B.

In a possible design, the communication apparatus 80 includes the receiving unit 801, the sending unit 802, and the processing unit 803, and the communication apparatus 80 is configured to implement methods on a second node side in the foregoing embodiments.

In a possible implementation, the receiving unit 801 is configured to receive a first message from a first node, where the first message includes a first key agreement parameter, the first key agreement parameter is associated with a first private key and an intermediate parameter, the intermediate parameter is associated with a security parameter and at least one common parameter, the security parameter is a first password, or a pre-shared key PSK between the first node and a second node, and the first password is an agreed access password between the first node and the second node.

The sending unit 802 is further configured to send a second message to the first node, where the second message includes a second key agreement parameter, and the second key agreement parameter is associated with a second private key and the intermediate parameter.

The processing unit 803 is configured to obtain a first key based on the first key agreement parameter and the second private key.

In still another possible implementation, the receiving unit 801 is further configured to receive a third message from the first node, where the third message includes first authentication information, the first authentication information is associated with a second key, and the second key is associated with the second key agreement parameter and the first private key.

The processing unit 803 is further configured to verify the first authentication information based on the first key.

In still another possible implementation, the first key is used to obtain one or more keys.

In a possible solution, the first key is used to obtain, through derivation, an encryption key, an integrity key, an identity authentication key, or the like.

In still another possible implementation, the sending unit 802 is further configured to:

if verification on the first authentication information succeeds, send an association establishment message to the first node.

In still another possible implementation, the sending unit 802 is further configured to:

when verification on the first authentication information and integrity of the third message succeeds, sending an association establishment message to the first node.

In still another possible implementation, the receiving unit 801 is further configured to:

receive indication information that is of a key agreement algorithm and that is sent by the first node, where the key agreement algorithm includes a TBPEKE algorithm.

Optionally, the indication information of the key agreement algorithm includes indication information of a first key agreement algorithm, and the indication information of the first key agreement algorithm indicates a TBPEKE algorithm.

In still another possible implementation, the at least one common parameter includes a first common parameter and a second common parameter.

The first common parameter and the second common parameter are related to a first elliptic curve, the first elliptic curve is an elliptic curve corresponding to the key agreement algorithm, and the key agreement algorithm includes the TBPEKE algorithm.

In still another possible implementation, the first common parameter and the second common parameter belong to points on the first elliptic curve.

In still another possible implementation, the first common parameter is predefined, the second common parameter is determined based on the first common parameter, a first random number, and a second random number, the first random number comes from the first node, and the second random number comes from the second node.

In a possible implementation, the at least one common parameter includes at least one basis point, and the at least one basis point belongs to a group whose order is p, where p is a prime number.

Optionally, the group may be a cyclic group or a cyclic subgroup related to an operation on the first elliptic curve.

Optionally, in some scenarios, the basis point may alternatively be replaced with a generator.

In still another possible implementation, when a selected key agreement algorithm is the TBPEKE algorithm, the at least one common parameter includes some or all elements in a group whose order is p, where p is a prime number.

A basis point (or referred to as a generator) of a subgroup whose order is p is U. For a selected number d, if a value range of d is [1, p-1], dU is included in the group.

Optionally, the at least one common parameter includes the basis point U. Further, optionally, the at least one common parameter further includes V obtained by performing an operation on U, where V=dU, and a range of d is [1, p-1].

In still another possible implementation, when a selected key agreement algorithm is the TBPEKE algorithm, the at least one common parameter includes two points in a group whose order is p.

Optionally, the two points may be two basis points. Alternatively, one of the two points is a basis point, and the other is a second basis point obtained through calculation based on the basis point. For ease of description, the two points are referred to as a first basis point and a second basis point in this application.

In still another possible implementation, when a selected key agreement algorithm is the TBPEKE algorithm, the common parameter of the TBPEKE algorithm includes a cyclic group whose order is a prime number p, and two independent basis points U and V in the group.

It should be understood that "independent" means that U and V are two points with different values, and is not intended to constitute a limitation that there is no association relationship between U and V.

In still another possible implementation, the receiving unit 801 is further configured to receive a first calculated value from the first node, where the first calculated value is related to the first random number and the first common parameter, the first random number is determined by the first node, and the first common parameter is predefined based on the TBPEKE algorithm.

The processing unit 803 is further configured to determine the second common parameter based on a second random number and the first calculated value.

The sending unit 802 is further configured to send a second calculated value to the first node, where the second calculated value is related to the second random number and the first common parameter, and the second calculated value is used by the first node to determine the second common parameter.

Optionally, the first common parameter is the foregoing first basis point, and the second common parameter is the foregoing second basis point.

In still another possible implementation, the intermediate parameter satisfies the following formula:

$$b = U + s * V,$$

where
b is the intermediate parameter, U and V are the at least one common parameter, s is the security parameter, "*" is an elliptic curve point multiplication operation, and " +" is an elliptic curve point addition operation.

In a possible implementation, U is a first basis point, and V is a second basis point. Further, U and V belong to a group whose order is p, where p is a prime number. An operation related to the group is an operation on the first elliptic curve.

The first elliptic curve is an elliptic curve used by a selected key agreement algorithm. For example, if the selected key agreement algorithm is the TBPEKE algorithm, the first elliptic curve may be an elliptic curve defined by SM2, Curve25519, or the like.

In still another possible implementation, the first key agreement parameter KEt satisfies the following formula:

$$KEt = SKt * b,$$

the first key satisfies the following formula:

$$first\ key = SKg * KEt = SKg * (SKt * b) = (SKt. SKg) * (U + s * V),$$

the second key agreement parameter KEg satisfies the following formula:

$$KEg = SKg * b,$$

and

the second key satisfies the following formula:

$$second\ key = SKt * KEg = SKt * (SKg * b) = (SKt. SKg) * (U + s * V),$$

where

SKt is the first private key, SKg is the second private key, and "." is a multiplication operation.

In still another possible implementation, a value range of the first private key (SKt) is [1, p), and a value range of the second private key (SKg) is [1, p), where p is an order of an elliptic curve used by the TBPEKE algorithm.

In still another possible implementation, the sending unit 802 is further configured to:
broadcast a key agreement algorithm capability of the second node, where the key agreement algorithm capability of the second node represents a key agreement algorithm supported by the second node.

In still another possible implementation, key agreement algorithms supported by the first node are sorted according to a priority sequence.

In still another possible implementation, the first message further includes a first fresh parameter, the first message further includes a first fresh parameter, and the first authentication information is associated with the pre-shared key PSK between the first node and the second node, the second key, the second message, the first fresh parameter, and the key agreement algorithm capability of the second node.

In still another possible implementation, the processing unit 803 is further configured to:

verify the first authentication information based on the PSK between the first node and the second node, the first key, the second message, the first fresh parameter, and the key agreement algorithm capability of the second node.

In still another possible implementation, the second message further includes second authentication information and a second fresh parameter, and the processing unit is further configured to:

obtain the second authentication information based on the PSK between the first node and the second node, the first key, the second fresh parameter, and the first message.

In still another possible implementation, the first message further includes a first fresh parameter, and the second message further includes a second fresh parameter; and the processing unit 803 is further configured to:

obtain a third key based on the first key, the first fresh parameter, and the second fresh parameter.

In still another possible implementation, the PSK is preconfigured or predefined, or is obtained based on the first password.

In still another possible implementation, the processing unit 803 is further configured to:

obtain the PSK between the first node and the second node according to a first correspondence.

It can be learned that the second node may store a correspondence between the PSK and the first node in a form of a correspondence. Therefore, the PSK between the first node and the second node may be obtained according to the correspondence.

In still another possible implementation, the processing unit is further configured to:

determine the PSK between the first node and the second node based on the first password, the first fresh parameter, and the second fresh parameter.

In a possible design, the PSK is determined based on the first password, the first key, the first fresh parameter, and the second fresh parameter.

In a possible design, the communication apparatus 80 includes the receiving unit 801 and the sending unit 802, and the communication apparatus 80 is configured to implement methods on a first node side in the foregoing embodiments.

In a possible implementation, the sending unit 802 is configured to send a first message to a second node, where the first message includes a first key agreement parameter, the first key agreement parameter is associated with a first private key and an intermediate parameter, the intermediate parameter is associated with a security parameter and at least one common parameter, the security parameter is a first password, or a pre-shared key PSK between a first node and the second node, and the first password is an agreed access password between the first node and the second node.

The receiving unit 801 is configured to receive a second message from the second node, where the second message includes a second key agreement parameter, and the second key agreement parameter is associated with a second private key and the intermediate parameter.

The processing unit 803 is configured to obtain a second key based on the second key agreement parameter and the first private key.

In a possible implementation, the sending unit 802 is further configured to send a third message to the first node, where the third message includes first authentication information, and the first authentication information is associated with the second key.

In still another possible implementation, the second key is used to obtain one or more keys.

In a possible solution, the second key is used to obtain, through derivation, an encryption key, an integrity key, an identity authentication key, or the like.

In still another possible implementation, the receiving unit 801 is further configured to:

receive an association establishment message from the second node.

In still another possible implementation, the communication apparatus further includes the processing unit 803, and the processing unit 803 is configured to:

select a first key agreement algorithm based on a key agreement algorithm capability of the second node, where the key agreement algorithm capability of the second node can indicate one or more key agreement algorithms supported by the second node.

In still another possible implementation, the sending unit 802 is further configured to send indication information of a key agreement algorithm to the second node, where the indication information of the key agreement algorithm indicates a two-basis password exponential function key exchange TBPEKE algorithm.

Optionally, because different elliptic curves are used, there may be a plurality of TBPEKE algorithms. For example, the TBPEKE algorithm includes one or more of the following elliptic curves: an elliptic curve defined by SM2, Curve25519, or the like. Therefore, the TBPEKE algorithm may include a TBPEKE algorithm using the elliptic curve defined by SM2, a TBPEKE algorithm using Curve25519, and the like.

In still another possible implementation, the at least one common parameter includes a first common parameter and a second common parameter.

The first common parameter and the second common parameter are related to a first elliptic curve, the first elliptic curve is an elliptic curve corresponding to the key agreement algorithm, and the key agreement algorithm includes the TBPEKE algorithm.

In still another possible implementation, the first common parameter and the second common parameter belong to points on the first elliptic curve.

In still another possible implementation, the first common parameter is predefined, the second common parameter is determined based on the first common parameter, a first random number, and a second random number, the first random number comes from the first node, and the second random number comes from the second node.

In a possible implementation, the at least one common parameter includes at least one basis point, and the at least one basis point belongs to a group whose order is p, where p is a prime number.

Optionally, the group may be a cyclic group or a cyclic subgroup related to an operation on the first elliptic curve.

Optionally, in some scenarios, the basis point may alternatively be replaced with a generator.

In still another possible implementation, when a selected key agreement algorithm is the TBPEKE algorithm, the at least one common parameter includes some or all elements in a group whose order is p, where p is a prime number.

A basis point (or referred to as a generator) of a subgroup whose order is p is U. For a selected number d, if a value range of d is [1, p-1], dU is included in the group.

Optionally, the at least one common parameter includes the basis point U. Further, optionally, the at least one common parameter further includes V obtained by performing an operation on U, where V=dU, and a range of d is [1, p-1].

In still another possible implementation, when a selected key agreement algorithm is the TBPEKE algorithm, the at least one common parameter includes two points in a group whose order is p.

Optionally, the two points may be two basis points. Alternatively, one of the two points is a basis point, and the other is a second basis point obtained through calculation based on the basis point. For ease of description, the two points are referred to as a first basis point and a second basis point in this application.

In still another possible implementation, when a selected key agreement algorithm is the TBPEKE algorithm, the common parameter of the TBPEKE algorithm includes a cyclic group whose order is a prime number p, and two independent basis points U and V in the group.

It should be understood that "independent" means that U and V are two points with different values, and is not intended to constitute a limitation that there is no association relationship between U and V.

In still another possible implementation, the sending unit 802 is further configured to send a first calculated value to the second node, where the first calculated value is related to the first random number and the first common parameter, the first random number is determined by the first node, and the first common parameter is predefined.

The receiving unit 801 is further configured to receive a second calculated value from the second node, where the second calculated value is related to a second random number and the first common parameter.

The processing unit 803 is configured to determine the second common parameter based on the second random number and the first calculated value.

Optionally, the first common parameter is the foregoing first basis point, and the second common parameter is the foregoing second basis point. In still another possible implementation, the intermediate parameter satisfies the following formula:

$$b = U + s * V,$$

where
b is the intermediate parameter, U and V are the at least one common parameter, s is the security parameter, "*" is an elliptic curve point multiplication operation, and "+" is an elliptic curve point addition operation.

In a possible implementation, U is a first basis point, and V is a second basis point. Further, U and V belong to a group whose order is p, where p is a prime number. An operation related to the group is an operation on the first elliptic curve.

The first elliptic curve is an elliptic curve used by a selected key agreement algorithm. For example, if the selected key agreement algorithm is the TBPEKE algorithm, the first elliptic curve may be an elliptic curve defined by SM2, Curve25519, or the like.

In still another possible implementation, the first key agreement parameter KEt satisfies the following formula:

$$KEt = SKt * b,$$

the first key satisfies the following formula:

$$\text{first key} = SKg * KEt = SKg * (SKt * b) = (SKt.SKg) * (U + s * V),$$

the second key agreement parameter KEg satisfies the following formula:

$$KEg = SKg * b,$$

and

the second key satisfies the following formula:

$$\text{second key} = SKt * KEg = SKt * (SKg * b) = (SKt.SKg) * (U + \ s \ * V),$$

where

SKt is the first private key, SKg is the second private key, and "." is a multiplication operation.

In still another possible implementation, a value range of the first private key (SKt) is [1, p), and a value range of the second private key (SKg) is [1, p), where p is an order of an elliptic curve used by the TBPEKE algorithm.

In still another possible implementation, the receiving unit 801 is further configured to:
receive the key agreement algorithm capability that is of the second node and that is sent by the second node, where the key agreement algorithm capability of the second node represents a key agreement algorithm supported by the second node.

In still another possible implementation, key agreement algorithms supported by the first node are sorted according to a priority sequence.

In still another possible implementation, the first message further includes a first fresh parameter, the first message further includes a first fresh parameter, and the first authentication information is associated with the pre-shared key PSK between the first node and the second node, the second key, the second message, the first fresh parameter, and the key agreement algorithm capability of the second node.

In still another possible implementation, the second message further includes second authentication information and a second fresh parameter, and the second authentication information is associated with the PSK between the first node and the second node, the first key, the second fresh parameter, and the first message.

In still another possible implementation, the processing unit 803 is further configured to:

verify the second authentication information based on the PSK between the first node and the second node, the second key, the second fresh parameter, and the first message; and
when verification on the second authentication information and integrity of the second message succeeds, generate the first authentication information.

In a possible implementation, the first message further includes a first fresh parameter, and the second message further includes a second fresh parameter; and the processing unit 803 is further configured to:
obtain a fourth key based on the second key, the first fresh parameter, and the second fresh parameter.

In a possible implementation, the PSK is preconfigured or predefined, or is obtained based on the first password.

In still another possible implementation, the processing unit 803 is further configured to:
obtain the PSK between the first node and the second node according to a second correspondence.

In still another possible implementation, the processing unit 803 is further configured to:
determine the PSK between the first node and the second node based on the first password, the first fresh parameter, and the second fresh parameter.

FIG. 9 is a diagram of a structure of a possible communication apparatus 90 according to an embodiment of this application.

The communication apparatus 90 may be an independent device such as a vehicle, a drone, or a robot, or may be a component, for example, a chip, a software module, or an integrated circuit, included in an independent device. The communication apparatus 90 may include at least one processor 901 and a communication interface 902. Optionally, the communication apparatus 90 may further include at least one memory 903. Further, optionally, the communication apparatus 90 may further include a connection line 904. The processor 901, the communication interface 902, and/or the memory 903 are connected through the connection line 904, and communicate with each other through the connection line 904, to transfer a control and/or data signal. Optionally, the communication apparatus 90 may further include one or more of a sensing module, an output module, or the like (not shown in the figure).

Specifically, the following content is provided.

(1) The processor 901 is a module for performing an arithmetic operation and/or a logical operation, and may specifically include one or more of the following apparatuses: a CPU, an MCU, a GPU, an MPU, an ASIC, an FPGA, a CPLD, a coprocessor (assisting the central processing unit in completing corresponding processing and application), an NPU, and/or the like.

(2) The communication interface 902 may be configured to provide information input or output for the at least one processor. In some possible scenarios, the communication interface 902 may include an interface circuit, and/or the communication interface 902 may be configured to receive data sent from the outside and/or send data to the outside. For example, the communication interface 902 may include a wired link interface such as an Ethernet cable, or may be a wireless link (Wi-Fi, Bluetooth, universal wireless transmission, a vehicle-mounted short-range communication technology, another short-range wireless communication technology, and the like) interface. Optionally, the communication interface 902 may further include a transmitter (for example, a radio frequency transmitter or an antenna), a receiver, or the like coupled to the interface.

Optionally, if the communication apparatus 90 is an independent device, the communication interface 902 may include a receiver and a transmitter. The receiver and the transmitter may be a same component or different components. When the receiver and the transmitter are a same component, the component may be referred to as a transceiver.

Optionally, if the communication apparatus 90 is a chip or a circuit, the communication interface 902 may include an input interface and an output interface. The input interface and the output interface may be a same interface, or may be different interfaces.

Optionally, a function of the communication interface 902 may be implemented by using a transceiver circuit or a dedicated transceiver chip, and the processor 901 may be implemented by using a dedicated processing chip, a processing circuit, a processor, or a general-purpose chip.

(3) The memory 903 is configured to provide storage space, and the storage space may store data such as an operating system and a computer program. The memory 903 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

Functions and actions of modules or units in the communication apparatus 90 listed above are merely examples for description.

Functional units in the communication apparatus 90 may be configured to implement the foregoing communication methods, for example, the communication method shown in FIG. 4, FIG. 6, or FIG. 7A and FIG. 7B. Herein, detailed descriptions are omitted to avoid repetition.

Optionally, the processor 901 may be a processor specially configured to perform the foregoing methods (referred to as a dedicated processor for ease of differentiation), or may be a processor that performs the foregoing methods by invoking a computer program (referred to as a dedicated processor for ease of differentiation). Optionally, the at least one processor may further include both a dedicated processor and a general-purpose processor.

Optionally, when the communication apparatus 90 includes at least one memory 903, if the processor 901 implements the foregoing communication methods by invoking a computer program, the computer program may be stored in the memory 903.

An embodiment of this application further provides a chip system. The chip system includes a processor and a communication interface. The communication interface is configured to receive and/or send data, and/or the communication interface is configured to provide input and/or output for the processor. The chip system is configured to implement the foregoing communication methods, for example, the method in FIG. 4, FIG. 6, or FIG. 7A and FIG. 7B.

An embodiment of this application further provides a computer-readable storage medium. The computer-readable storage medium stores instructions. When the instructions are run on at least one processor, the foregoing communication methods are implemented, for example, the method in FIG. 4, FIG. 6, or FIG. 7A and FIG. 7B.

An embodiment of this application further provides a computer program product. The computer program product includes computer instructions, and the computing instructions are used to implement the foregoing communication methods, for example, the method in FIG. 4, FIG. 6, or FIG. 7A and FIG. 7B.

It should be noted that, in embodiments of this application, the word "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces).

For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in embodiments of this application are used for differentiation between a plurality of objects, but are not intended to limit an order, a time sequence, priorities, or importance of the plurality of objects. For example, a first device and a second device are merely used for ease of description, and do not indicate a difference between the first device and the second device in terms of a structure and a degree of importance. In some embodiments, a first device and a second device may alternatively be a same device.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the idea and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

**Claims**

1. A communication method, wherein the method comprises:

   receiving a first message from a first node, wherein the first message comprises a first key agreement parameter, the first key agreement parameter is associated with a first private key and an intermediate parameter, the intermediate parameter is associated with a security parameter and at least one common parameter, the security parameter is a first password, or a pre-shared key PSK between the first node and a second node, and the first password is an agreed access password between the first node and the second node;
   sending a second message to the first node, wherein the second message comprises a second key agreement parameter, and the second key agreement parameter is associated with a second private key and the intermediate parameter; and
   obtaining a first key based on the first key agreement parameter and the second private key.

2. The method according to claim 1, wherein the first key is used to obtain one or more of an encryption key, an integrity key, or an identity authentication key.

3. The method according to claim 1, wherein the method further comprises:

   receiving a third message from the first node, wherein the third message comprises first authentication information, the first authentication information is associated with a second key, and the second key is associated with the second key agreement parameter and the first private key; and
   verifying the first authentication information based on the first key.

4. The method according to claim 3, wherein the method further comprises:
   when verification on the first authentication information and integrity of the third message succeeds, sending an association establishment message to the first node.

5. The method according to any one of claims 1 to 4, wherein the method further comprises:
   receiving indication information that is of a first key agreement algorithm and that is sent by the first node, wherein the indication information of the first key agreement algorithm indicates a two-basis password exponential key exchange TBPEKE algorithm.

6. The method according to any one of claims 1 to 5, wherein the at least one common parameter comprises a first common parameter and a second common parameter; and
   the first common parameter and the second common parameter are related to a first elliptic curve, the first elliptic curve is an elliptic curve corresponding to the first key agreement algorithm, and the first key agreement algorithm is the TBPEKE algorithm.

7. The method according to claim 6, wherein the method further comprises:

receiving a first calculated value from the first node, wherein the first calculated value is related to a first random number and the first common parameter, the first random number is determined by the first node, and the first common parameter is predefined;
determining the second common parameter based on a second random number and the first calculated value; and
sending a second calculated value to the first node, wherein the second calculated value is related to the second random number and the first common parameter.

8. The method according to any one of claims 5 to 7, wherein the intermediate parameter satisfies the following formula:

$$b = U + s * V,$$

wherein
b is the intermediate parameter, U and V are the at least one common parameter, s is the security parameter, * is an elliptic curve point multiplication operation, and + is an elliptic curve point addition operation.

9. The method according to any one of claims 5 to 8, wherein the at least one common parameter comprises a cyclic group whose order is a prime number p, and two independent basis points U and V in the cyclic group.

10. The method according to claim 8 or 9, wherein the first key agreement parameter KEt satisfies the following formula:

$$KEt = SKt * b,$$

the first key satisfies the following formula:

$$first\ key = SKg * KEt,$$

the second key agreement parameter KEg satisfies the following formula:

$$KEg = SKg * b,$$

and
the second key satisfies the following formula:

$$second\ key = SKt * KEg,$$

wherein
SKt is the first private key, and SKg is the second private key.

11. The method according to any one of claims 5 to 10, wherein a value range of the first private key is [1, p), and a value range of the second private key is [1, p), wherein p is an order of an elliptic curve used by the TBPEKE algorithm.

12. The method according to any one of claims 1 to 11, wherein before the receiving a first message from a first node, the method further comprises:
broadcasting a key agreement algorithm capability of the second node, wherein the key agreement algorithm capability of the second node represents a key agreement algorithm supported by the second node.

13. The method according to claim 12, wherein key agreement algorithms supported by the second node are sorted according to a priority sequence.

14. The method according to claim 3 or 4, wherein the first message further comprises a first fresh parameter;

the first authentication information is associated with the PSK, the second key, the second message, the first fresh parameter, and a key agreement algorithm capability of the second node; and
the verifying the first authentication information based on the first key comprises:
verifying the first authentication information based on the PSK, the first key, the second message, the first fresh parameter, and the key agreement algorithm capability of the second node.

15. The method according to any one of claims 1 to 14, wherein the second message further comprises second authentication information and a second fresh parameter; and the method further comprises:
obtaining the second authentication information based on the PSK, the first key, the second fresh parameter, and the first message.

16. A communication method, wherein the method comprises:

sending a first message to a second node, wherein the first message comprises a first key agreement parameter, the first key agreement parameter is associated with a first private key and an intermediate parameter, the intermediate parameter is associated with a security parameter and at least one common parameter, the security parameter is a first password, or a pre-shared key PSK between a first node and the second node, and the first password is an agreed access password between the first node and the second node;
receiving a second message from the second node, wherein the second message comprises a second key agreement parameter, and the second key agreement parameter is associated with a second private key and the intermediate parameter; and
obtaining a second key based on the second key agreement parameter and the first private key.

17. The method according to claim 16, wherein the second key is used to obtain one or more of an encryption key, an integrity key, or an identity authentication key.

18. The method according to claim 16, wherein the method further comprises:
sending a third message to the first node, wherein the third message comprises first authentication information, and the first authentication information is associated with the second key.

19. The method according to claim 17 or 18, wherein the method further comprises:
receiving an association establishment message from the second node.

20. The method according to any one of claims 16 to 19, wherein before the sending a first message to a second node, the method further comprises:

selecting a first key agreement algorithm based on a key agreement algorithm capability of the second node; and
sending indication information of the first key agreement algorithm to the second node, wherein the indication information of the first key agreement algorithm indicates a two-basis password exponential key exchange TBPEKE algorithm.

21. The method according to any one of claims 16 to 20, wherein the at least one common parameter comprises a first common parameter and a second common parameter; and
the first common parameter and the second common parameter are related to the first elliptic curve, the first elliptic curve is an elliptic curve corresponding to the first key agreement algorithm, and the first key agreement algorithm is the TBPEKE algorithm.

22. The method according to claim 21, wherein the method further comprises:

sending a first calculated value to the second node, wherein the first calculated value is related to a first random number and the first common parameter, the first random number is determined by the first node, and the first common parameter is predefined;
receiving a second calculated value from the second node, wherein the second calculated value is related to a second random number and the first common parameter; and
determining the second common parameter based on the second random number and the first calculated value.

23. The method according to any one of claims 20 to 22, wherein the first key agreement algorithm is a key agreement algorithm supported by the first node, and the first key agreement algorithm has a highest priority in key agreement algorithms supported by the second node.

24. The method according to any one of claims 20 to 23, wherein the intermediate parameter satisfies the following formula:

$$b = U + s * V,$$

wherein
b is the intermediate parameter, U and V are the at least one common parameter, s is the security parameter, * is an elliptic curve point multiplication operation, and + is an elliptic curve point addition operation.

25. The method according to any one of claims 20 to 24, wherein U is a first basis point, V is a second basis point, and U and V belong to a cyclic group whose order is p, wherein p is a prime number.

26. The method according to claim 24 or 25, wherein the first key agreement parameter KEt satisfies the following formula:

$$KEt = SKt * b,$$

the first key satisfies the following formula:

$$first\ key = SKg * KEt,$$

the second key agreement parameter KEg satisfies the following formula:

$$KEg = SKg * b,$$

and
the second key satisfies the following formula:

$$second\ key = SKt * KEg,$$

wherein
SKt is the first private key, and SKg is the second private key.

27. The method according to any one of claims 20 to 26, wherein a value range of the first private key is [1, p), and a value range of the second private key is [1, p), wherein p is an order of an elliptic curve used by the TBPEKE algorithm.

28. The method according to any one of claims 16 to 27, wherein before the sending a first message to a second node, the method further comprises:
receiving the key agreement algorithm capability that is of the second node and that is sent by the second node, wherein the key agreement algorithm capability of the second node represents a key agreement algorithm supported by the second node.

29. The method according to claim 28, wherein the key agreement algorithms supported by the second node are sorted according to a priority sequence.

30. The method according to any one of claims 16 to 29, wherein the first message further comprises a first fresh parameter, and the first authentication information is associated with the PSK, the second key, the second message, the first fresh parameter, and the key agreement algorithm capability of the second node.

31. The method according to claim 18, wherein the second message further comprises second authentication information and a second fresh parameter, and the second authentication information is associated with the PSK, the first key, the second fresh parameter, and the first message; and the method further comprises:

verifying the second authentication information based on the PSK, the second key, the second fresh parameter, and the first message; and

when verification on the second authentication information and integrity of the second message succeeds, generating the first authentication information.

32. A communication apparatus, comprising:

a receiving unit, configured to receive a first message from a first node, wherein the first message comprises a first key agreement parameter, the first key agreement parameter is associated with a first private key and an intermediate parameter, the intermediate parameter is associated with a security parameter and at least one common parameter, the security parameter is a first password, or a pre-shared key PSK between the first node and a second node, and the first password is an agreed access password between the first node and the second node;

a sending unit, further configured to send a second message to the first node, wherein the second message comprises a second key agreement parameter, and the second key agreement parameter is associated with a second private key and the intermediate parameter; and

a processing unit, configured to obtain a first key based on the first key agreement parameter and the second private key.

33. The communication apparatus according to claim 32, wherein the first key is used to obtain one or more of an encryption key, an integrity key, or an identity authentication key.

34. The communication apparatus according to claim 32, wherein

the receiving unit is further configured to receive a third message from the first node, wherein the third message comprises first authentication information, the first authentication information is associated with a second key, and the second key is associated with the second key agreement parameter and the first private key; and

the processing unit is further configured to verify the first authentication information based on the first key.

35. The communication apparatus according to any one of claims 32 to 34, wherein the receiving unit is further configured to:

receive indication information that is of a first key agreement algorithm and that is sent by the first node, wherein the indication information of the first key agreement algorithm indicates a two-basis password exponential key exchange TBPEKE algorithm.

36. A communication apparatus, comprising:

a sending unit, configured to send a first message to a second node, wherein the first message comprises a first key agreement parameter, the first key agreement parameter is associated with a first private key and an intermediate parameter, the intermediate parameter is associated with a security parameter and at least one common parameter, the security parameter is a first password, or a pre-shared key PSK between a first node and the second node, and the first password is an agreed access password between the first node and the second node;

a receiving unit, further configured to receive a second message from the second node, wherein the second message comprises a second key agreement parameter, and the second key agreement parameter is associated with a second private key and the intermediate parameter; and

a processing unit, configured to obtain a second key based on the second key agreement parameter and the first private key.

37. The communication apparatus according to claim 36, wherein the second key is used to obtain one or more of an encryption key, an integrity key, or an identity authentication key.

38. The communication apparatus according to claim 36, wherein

the sending unit is further configured to send a third message to the first node, wherein the third message comprises first authentication information, and the first authentication information is associated with the second key.

39. The communication apparatus according to any one of claims 36 to 38, wherein the communication apparatus further comprises the processing unit, and

the processing unit is configured to select a first key agreement algorithm based on a key agreement algorithm capability of the second node; and

the sending unit is further configured to send indication information of the first key agreement algorithm to the second node, wherein the indication information of the first key agreement algorithm indicates a two-basis password exponential key exchange TBPEKE algorithm.

40. A chip system, wherein the chip system comprises at least one processor and a communication interface, the communication interface is configured to send and/or receive data, and the at least one processor is configured to invoke a computer program stored in at least one memory, to enable the chip system to implement the method according to any one of claims 1 to 15 or implement the method according to any one of claims 16 to 31.

41. A computer-readable storage medium, wherein the computer-readable storage medium stores a computer program, and when the computer program runs on a computer, the computer is enabled to perform the method according to any one of claims 1 to 15 or perform the method according to any one of claims 16 to 31.

42. A communication system, comprising:

a second node, wherein the second node comprises the communication apparatus according to any one of claims 32 to 35; and

a first node, wherein the first node comprises the communication apparatus according to any one of claims 36 to 39.

43. A vehicle, wherein the vehicle comprises a first node and/or a second node, wherein

the second node comprises the communication apparatus according to any one of claims 32 to 35, or the second node is a node that implements the method according to any one of claims 1 to 15; and

the first node comprises the communication apparatus according to any one of claims 36 to 39, or the first node is a node that implements the method according to any one of claims 16 to 31.

44. A communication system, comprising a second node that implements the method according to any one of claims 1 to 15 and a first node that implements the method according to any one of claims 16 to 31.

Curve (curve): a 0    b 7

$P$: x −1.44225    y 2

$Q$: x 2.08008    y 4

$R=P+Q$: x −0.31543    y −2.63982

Elliptic curve: $y^2=x^3+7$

FIG. 1(a)

EP 4 513 826 A1

Curve (curve): | a | 0 | | b | 7 |

P: | x | 1 | | y | 2.82843 |

Q: | x | 1 | | y | 2.82843 |

R=P+Q=2P: | x | −1.71875 | | y | −1.3866 |

Elliptic curve: $y^2=x^3+7$

FIG. 1(b)

Curve (curve): | a | 0 | | b | 7 |

R(2P): | x | −1.71875 | | y | −1.38659 |

−P: | x | 1 | | y | −2.82843 |

P=R−P: | x | 1 | | y | 2.82843 |

Elliptic curve: $y^2 = x^3 + 7$

FIG. 1(c)

EP 4 513 826 A1

201

First node

202

Second node

FIG. 2

301

302

FIG. 3

```
┌──────────────┐                              ┌──────────────┐
│  First node  │                              │ Second node  │
└──────┬───────┘                              └──────┬───────┘
       │                                             │
       │      Access message/Broadcast message       │
       │◄ ─ ─ ─ ─ ─ ─ ─ ─ ─ ─ ─ ─ ─ ─ ─ ─ ─ ─ ─ ─ ─│
       │     (key agreement algorithm capability)     │
       │                                             │
       │   S401: Send a first message to the second node
       │────────────────────────────────────────────►│
       │        (first key agreement parameter)       │
       │                                             │
       │   S402: Send a second message to the first node
       │◄────────────────────────────────────────────│
       │       (second key agreement parameter)       │
```

S404 (optional): Obtain a second key based on the second key agreement parameter and a first private key

S403: Obtain a first key based on the first key agreement parameter and a second private key

S405 (optional): Send a third message to the second node

(first authentication information)

S406 (optional): Verify the first authentication information based on the first key

FIG. 4

First node

Second node

S51: Generate a random number x, and calculate X=x*U

S52: Send X to the second node

S53: Generate a random number y, calculate Y=y*U, and calculate V=y*X

S54: Send Y to the first node

S55: Calculate V=x*Y

FIG. 5

First node

Second node

Broadcast message

(key agreement algorithm capability)

S601: Select a TPPEKE algorithm

S602: Generate a first private key SKt, and calculate a public key PKt, where the public key PKt is used as a first key agreement parameter KEt

S603: Send an association request message to the second node

(ID, KE alg, KEt, and NONCEt)

S604: Generate a private key SKg, and calculate a public key PKg, where the public key PKg is used as a second key agreement parameter KEg

S605: Determine a first key $K_{KE}$ based on the private key SKg and the first key agreement parameter KEt

S606: Calculate second authentication information AUTHg based on $K_{KE}$ and a PSK

S607: Send a security context request message to the first node

(KEg, NONCEg, and AUTHg)

S608: Determine a second key $K_{KE}$ based on the private key SKt and the second key agreement parameter KEg

S609: Calculate first authentication information AUTHt based on $K_{KE}$ and the PSK

S610: Send a security context response message to the second node

(AUTHt)

S611: Send an association establishment message to the first node

FIG. 6

```
┌──────────────┐                                          ┌───────────────┐
│  First node  │                                          │  Second node  │
└──────────────┘                                          └───────────────┘
```

Broadcast message

(key agreement algorithm
capability of the second node)

S701: Select a key agreement algorithm

S702: Generate a random number x, and calculate X=x*U

S703 (optional): Send indication information of
the key agreement algorithm to the second node

S704: Send X to the second node

S705: Generate a random number y, calculate Y=y*U, and
calculate V=y*X

S706: Generate a private key SKg, and calculate a public key
PKg, where the public key PKg is used as a second key
agreement parameter KEg

S707: Send Y to the first node

S708: Calculate V=x*Y

S709: Generate a private key SKt, and calculate a public key
PKt, where the public key PKt is used as a first key
agreement parameter KEt

S710: Send an association request
message to the second node

(KEt, NONCEt, ID, and KE alg)

TO
FIG. 7B

TO
FIG. 7B

FIG. 7A

CONT.
FROM
FIG. 7A

CONT.
FROM
FIG. 7A

S711: Determine a first key $K_{KE}$ based on the private key SKg and the first key agreement parameter KEt

S712: Calculate second authentication information AUTHg based on $K_{KE}$ and a PSK

S713: Send a security context request message to the first node

(KEg, NONCEg, and AUTHg)

S714: Determine a second key $K_{KE}$ based on the private key SKt and the second key agreement parameter KEg

S715: Calculate first authentication information AUTHt based on $K_{KE}$ and the PSK

S716: Send a security context response message to the second node

(AUTHt)

S717: Send an association establishment message to the first node

FIG. 7B

FIG. 8

FIG. 9

## INTERNATIONAL SEARCH REPORT

| International application No. |
| --- |
| **PCT/CN2022/096486** |

**A. CLASSIFICATION OF SUBJECT MATTER**

H04L 9/30(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, IEEE, CNKI: 密钥, 密码, 协商, 安全参数, PSK, 共享, 约定, 口令, 参数, 公共, 公开, Key, Password, Negotiation, Security Parameters, Shared, Parameters, Public

**C. DOCUMENTS CONSIDERED TO BE RELEVANT**

| Category* | Citation of document, with indication, where appropriate, of the relevant passages | Relevant to claim No. |
| --- | --- | --- |
| X | 隋爱芬等 (SUI, Aifen et al.). "基于椭圆曲线密码的可认证密钥协商协议的研究 (Research on the Authenticated Key Agreement Protocol Based on Elliptic Curve Cryptography)" 北京邮电大学学报 (*Journal of Beijing University of Posts and Telecommunications*), No. 03, 30 June 2004 (2004-06-30), text, page 4, section 3 | 1-44 |
| A | CN 112740733 A (HUAWEI TECHNOLOGIES CO., LTD.) 30 April 2021 (2021-04-30) entire document | 1-44 |
| A | CN 112713997 A (BEIJING WATCHDATA CO., LTD.) 27 April 2021 (2021-04-27) entire document | 1-44 |
| A | US 2009307495 A1 (PANASONIC CORP.) 10 December 2009 (2009-12-10) entire document | 1-44 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 November 2022** | **02 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/096486**

| Patent document cited in search report | | | Publication date (day/month/year) | Patent family member(s) | | | Publication date (day/month/year) |
|---|---|---|---|---|---|---|---|
| CN | 112740733 | A | 30 April 2021 | WO | 2022133949 | A1 | 30 June 2022 |
| CN | 112713997 | A | 27 April 2021 | CN | 112713997 | B | 22 April 2022 |
| US | 2009307495 | A1 | 10 December 2009 | JP | 2009296190 | A | 17 December 2009 |
| | | | | US | 8307208 | B2 | 06 November 2012 |

Form PCT/ISA/210 (patent family annex) (January 2015)